# EUROPÄISCHE PATENTSCHRIFT

(11) **EP 4 172 223 B1**
(45) Veröffentlichungstag und Bekanntmachung des Hinweises auf die Patenterteilung: **03.04.2024**
(21) Anmeldenummer: 21739030.1
(22) Anmeldetag: 24.06.2021
(51) Int. Cl.: C08G 18/08, C08G 18/42, C08G 18/48, C08G 18/66, C08G 18/76, C09D 175/04, C08G 18/44, C08L 75/04, B32B 1/08, B32B 27/40, F16L 9/12

(54) **FLUIDLEITUNG, VERFAHREN ZUM HERSTELLEN EINER FLUIDLEITUNG SOWIE VERWENDUNG EINES POLYURETHANS ALS SCHEUERSCHUTZSCHICHT UND VERWENDUNG EINES ETHYLEN-COPOLYMERS ALS EIN ADDITIV**
FLUID CONDUIT, METHOD FOR PRODUCING A FLUID CONDUIT AND USE OF A POLYURETHANE AS A CHAFE LAYER AND USE OF AN ETHYLENE COPOLYMER AS AN ADDITIVE
CONDUITE DE FLUIDE, PROCÉDÉ DE FABRICATION D'UNE CONDUITE DE FLUIDE, UTILISATION D'UN POLYURÉTHANE COMME COUCHE DE PROTECTION CONTRE LE FROTTEMENT ET UTILISATION D'UN COPOLYMÈRE D'ÉTHYLÈNE COMME ADDITIF

(30) Priorität: 24.06.2020 DE 102020207851
(43) Veröffentlichungstag der Anmeldung: 03.05.2023
(73) Patentinhaber: aft automotive GmbH, 48268 Greven-Reckenfeld (DE)
(72) Erfinder: WEHRMANN, Christoph, 48629 Metelen (DE); LEBERFINGER, Marcus, 49124 Georgsmarienhuette (DE); PARK, Jeongbeom, Suwon-si Suwon Gyeonggi-do 16678 (KR); RA, Chansoo, Suwon-si Suwon Gyeonggi-do 16678 (KR); MOON, Sanghoon, Suwon-si Suwon Gyeonggi-do 16678 (KR)
(74) Vertreter: Dietz, Christopher Friedrich
(86) Internationale Anmeldenummer: PCT/EP2021/067379
(87) Internationale Veröffentlichungsnummer: WO 2021/260130

(56) Entgegenhaltungen:
- WO-A1-2011/048972
- WO-A2-2004/048086
- CA-A1- 2 535 464
- US-A1- 2003 232 933

## Beschreibung

Die Erfindung betrifft eine Fluidleitung mit einem Grundkörper und einer Scheuerschutzschicht, wobei der Grundkörper über wenigstens eine aus Kunststoff bestehende Schicht verfügt und die Scheuerschutzschicht eine Außenschicht der Fluidleitung bildet. Die Erfindung betrifft weiterhin ein Verfahren zum Herstellen einer Fluidleitung sowie die Verwendung eines Polyurethans, das ein Polyol und ein Isocyanat enthält, als Scheuerschutzschicht und die Verwendung eines Ethylen-Copolymers als ein Additiv.

Aus dem Stand der Technik ist beispielsweise die Druckschrift DE 20 2011 109 257 U1 bekannt. Diese beschreibt eine Anordnung mit zumindest einer gebogenen flexiblen Medienleitung, wobei zum Verhindern eines Rückformens einer der flexiblen Medienleitung eingegebenen Biegeform zumindest ein Mittel zur Formstabilisierung vorgesehen ist, wobei das Mittel zur Formstabilisierung während des Biegeformens oder nach dem Biegeformen der Medienleitung die Form annimmt und durch Energietransfer behält.

Weiterhin offenbart die Druckschrift WO 2004/048086 A2 einen mehrschichtigen, röhrenförmigen Polymerverbundstoff für Gegenstände wie Rohre und Schläuche. Der Verbundstoff kann gebildet werden aus einer innersten und einer äußersten Schicht und mindestens einer Zwischenschicht zwischen der innersten und der äußersten Schicht. Die innerste und die äußerste Schicht können jeweils direkt mit einer der Zwischenschichten verbunden sein und können aus einem thermoplastischen polymeren Material bestehen, das ein Polyamid sein kann. Jede der Zwischenschichten kann aus einem thermoplastischen Polymermaterial bestehen, bei dem es sich um Polyester, Copolyester oder Polyurethan handeln kann.

Zudem beschreibt die Druckschrift US 2003/232933 A1 eine Polymermischungszusammensetzung, hergestellt durch Reaktion eines thermoplastischen Polyurethanpolymers und eines anderen Polymers, wie z.B. Poly(ethylen-co-vinylacetat)-Polymer, das eine funktionelle Gruppe aufweist, die mit einem Isocyanat reagieren kann. Die Polymere werden unter Verwendung einer Polyisocyanatverbindung während des Schmelzmischens zur Reaktion gebracht. Vorzugsweise erfolgt die Schmelzmischung in einem Extruder. Die Polymermischung weist eine verbesserte Zugfestigkeit, eine verbesserte Abriebfestigkeit und eine höhere Schmelzfestigkeit auf und lässt sich daher besser verarbeiten.

Schließlich ist aus der Druckschrift WO 2011/048972 A1 ein Verbundbauteil, das durch Verbinden einer Metallkomponente mit einer thermoplastischen Polyurethankomponente unter Verwendung eines Klebstoffs, der ein Bisphenol-A-Epoxidharz und einen Silan-Haftvermittler enthält, erhalten wird. Vorzugsweise wird ein Klebstoff, der ein Phenolharz und ein Epoxidharz enthält, vor dem Auftragen des Klebstoffs als Basisklebstoff auf die Komponenten aufgetragen.

Es ist Aufgabe der Erfindung, eine Scheuerschutzschicht für eine Fluidleitung vorzuschlagen, welche gegenüber bekannten Scheuerschutzschichten Vorteile aufweist, insbesondere die Fluidleitung besonders effektiv und vor allem dauerhaft vor äußeren Einflüssen schützt, insbesondere in einem Maschinen- oder Motorraum. Derartige Einflüsse verlangen insbesondere eine hohe Temperatur-, Mikroben- und Feuchtigkeitsbelastbarkeit, als auch Beständigkeit gegen Chemikalien, bei gleichzeitig hoher mechanischer Stabilität, insbesondere Zug- und Scheuerfestigkeit. Als Chemikalien kommen hier Kraftstoffe, Fette, Öle, Kühlmittel, Bremsflüssigkeiten und Reinigungsmittel in Frage.

Dies wird erfindungsgemäß mit einer Fluidleitung mit den Merkmalen des Anspruchs 1 erreicht. Dabei ist vorgesehen, dass die Scheuerschutzschicht eine Schichtstärke von mindestens 0,1 mm bis höchstens 1,0 mm aufweist und aus thermoplastischem Polyurethan besteht, das als Polycarbonat-Polyol vorliegendes Polyol, Diol als Kettenverlängerer und Isocyanat enthält.

Die Fluidleitung dient dem Transportieren eines Fluids, insbesondere eines flüssigen oder gasförmigen Fluids. Die Fluidleitung wird beispielsweise im Kraftfahrzeugbereich eingesetzt und kann dementsprechend einen Bestandteil eines Kraftfahrzeugs darstellen. Vorzugsweise dient die Fluidleitung als Kraftstoffleitung und somit dem Zuführen eines Kraftstoffs zu einem Antriebsaggregat des Kraftfahrzeugs. Die Fluidleitung ist jedoch grundsätzlich universell anwendbar. Beispielsweise kann sie auch in Form einer Unterdruckleitung, insbesondere einer Bremsunterdruckleitung, einer BlowBy-Leitung, einer Hydraulikleitung, einer Kühlmittelleitung, einer Schmiermittelleitung, einer Kurbelgehäuseentlüftungsleitung oder einer Aktivkohlefilterregenerationsleitung vorliegen.

Die Fluidleitung ist grundsätzlich derart ausgestaltet, dass sie allen Anforderungen im Automotive-Bereich gerecht wird. Insbesondere ist die Fluidleitung dazu vorgesehen und ausgebildet, in einem Motorraum des Kraftfahrzeugs Verwendung zu finden. Entsprechend ist die Fluidleitung derart ausgestaltet, dass sie üblichen Umgebungsbedingungen in dem Motorraum bei einem bestimmungsgemäßen Betrieb der Antriebseinrichtung standhält. Insbesondere ist die Fluidleitung zur dauerhaften Verwendung bei einer Umgebungstemperatur und/oder mit einer Fluidtemperatur von mindestens 80 °C, mindestens 100 °C, mindestens 120 °C, mindestens 140 °C oder mindestens 160 °C vorgesehen und ausgebildet. Die Fluidleitung widersteht den genannten Temperaturen also nicht nur kurzfristig, sondern über eine längere Zeitspanne hinweg, insbesondere dauerhaft.

Die Fluidleitung weist einen Grundkörper auf, der wiederum über wenigstens eine Schicht verfügt. Der Grundkörper kann einschichtig ausgestaltet sein und insoweit lediglich eine einzige Schicht aufweisen. Alternativ ist der Grundkörper mehrschichtig und verfügt entsprechend über mehrere Schichten. Die Schicht beziehungsweise die Schichten bestehen aus Kunststoff. Liegen mehrere Schichten vor, so besteht wenigstens eine der Schichten aus Kunststoff, vorzugsweise gilt dies jedoch mehrere oder sogar alle Schichten. Der Kunststoff kann grundsätzlich zunächst beliebig gewählt werden, wenngleich bestimmte Kunststoffe für bestimmte Einsatzgebiete bevorzugt werden. Auf vorteilhafte Ausgestaltungen der Fluidleitung beziehungsweise ihres Grundkörpers wird nachstehend noch eingegangen werden.

Häufig wird die Fluidleitung in einem Bauraum eingesetzt, in welchem es zu einem Berührkontakt der Fluidleitung mit einem anderen Bauteil kommen kann. Dies ist insbesondere der Fall, falls die Fluidleitung an Bord eines Kraftfahrzeugs, zum Beispiel in einem Motorraum des Kraftfahrzeugs eingesetzt wird. Der Bauraum in einem solchen Motorraum wird durch die zunehmende Komplexität der Aggregate in Kombination mit höheren Sicherheits- und Komfortanforderungen immer enger. Dies betrifft vor allem Fluidleitungen, die oft auch im Zuge einer zunehmenden Variantenvielfalt der Kraftfahrzeuge um sich ändernde Bauteile herum angeordnet werden müssen. Die üblichen Konstruktionsrichtlinien für derartige Fluidleitungen, die einen allseitigen Mindestfreigang zu benachbarten Elementen aufgrund von Bauteil-, Kontur- und Einbautoleranzen und nicht zuletzt zum Ausgleich von Bewegungen des Kraftfahrzeugs sowie Verformungen aufgrund von Wärmedehnungen und/oder Dehnungen aufgrund von Innendrücken vorsehen, können teilweise nicht mehr eingehalten werden.

Dies führt dazu, dass mit einer Kontaktstelle der Fluidleitung zu einem oder mehreren Bauteilen gerechnet werden muss. Somit liegt ein statischer oder dynamischer Kontakt der Fluidleitung mit dem Bauteil vor, der eine mechanische Belastung bewirkt. Der Kontakt darf über die Lebensdauer des Kraftfahrzeugs hinweg nicht dazu führen, dass die Fluidleitung durch Abrieb oder andere Beschädigungen undicht wird oder sogar birst. Somit sind für die Fluidleitung konkrete Maßnahmen für einen Scheuerschutz zu treffen. Hierzu dient die Scheuerschutzschicht, welche nach der Herstellung der Fluidleitung einen Bestandteil der Fluidleitung bildet. Die Scheuerschutzschicht weist- unabhängig von der Art ihrer Herstellung und/oder ihrer Aufbringung auf den Grundkörper - eine Schichtstärke von mindestens 0,1 mm bis höchstens 1,0 mm, höchstens 0,75 mm oder höchstens 0,5 mm auf. Vorzugsweise beträgt sie mindestens 0,3 mm bis höchstens 0,5 mm.

Beispielsweise wird die Fluidleitung nach ihrer Herstellung thermisch umgeformt, insbesondere im Rahmen eines Biegevorgangs. Entsprechend muss eine ausgeprägte Rückstellkraft und/oder Rückprallelastizität der Fluidleitung vermieden werden, um ein Rückformen zu verhindern. Aus diesem Grund wird eine geringe Schichtstärke der Scheuerschutzschicht angestrebt. Die geringe Schichtstärke wirft wiederum andere Schwierigkeiten auf, insbesondere nimmt die Schutzwirkung der Scheuerschutzschicht vor mechanischen Einflüssen, thermischen Einflüssen, Hydrolyse, Oxidation und/oder Mikrobenangriff mit abnehmender Schichtstärke ebenfalls ab. Entsprechend muss sichergestellt sein, dass trotz der geringen Schichtstärke eine hinreichende Schutzwirkung erzielt wird. Dies wird mit der hier beschriebenen Ausgestaltung der Fluidleitung beziehungsweise ihrer Scheuerschutzschicht in besonderem Maße erzielt.

Die Scheuerschutzschicht ist nach Herstellung der Fluidleitung auf einer Außenschicht des Grundkörpers angeordnet und bildet somit bevorzugt selbst eine Außenschicht der Fluidleitung, also eine der Außenumgebung zugewandte Schicht. Es kann grundsätzlich vorgesehen sein, die Scheuerschutzschicht unabhängig von dem Grundkörper auszubilden und sie zur Herstellung der Fluidleitung an dem Grundkörper anzuordnen beziehungsweise auf ihn aufzubringen. Dies ist jedoch vergleichsweise aufwendig, weil einerseits die Scheuerschutzschicht separat von dem Grundkörper hergestellt wird und zum anderen nachfolgend an ihr angeordnet werden muss. Bevorzugt ist es daher, die Scheuerschutzschicht durch Extrudieren auf den Grundkörper aufzubringen. Das bedeutet, dass die Scheuerschutzschicht stoffschlüssig mit dem Grundkörper beziehungsweise der Außenschicht des Grundkörpers verbunden wird. Als Extrudieren kann hierbei beispielsweise ein Aufextrudieren oder ein Coextrudieren verwendet werden. Das Aufextrudieren der Scheuerschutzschicht auf den Grundkörper erfolgt nach dem Ausbilden des Grundkörpers. Es wird also zunächst der Grundkörper hergestellt beziehungsweise ausgebildet, vorzugweise ebenfalls durch Extrudieren. Anschließend wird die Scheuerschutzschicht auf den bereits ausgebildeten, insbesondere extrudierten, Grundkörper aufextrudiert.

Besonders bevorzugt wird die Scheuerschutzschicht gleichzeitig mit dem Grundkörper ausgebildet und hierbei stoffschlüssig mit diesem verbunden. Hierzu kommt insbesondere das Coextrudieren zum Einsatz, bei welchem sowohl der Grundkörper als auch die Scheuerschutzschicht gleichzeitig durch Extrudieren ausgebildet und aneinander befestigt werden. Das Aufextrudieren unterscheidet sich von dem Coextrudieren durch die zeitliche Abfolge. Während bei dem Aufextrudieren die Scheuerschutzschicht auf den bereits ausgebildeten Grundkörper aufgebracht wird, wird bei dem Coextrudieren die Scheuerschutzschicht gleichzeitig mit dem Grundkörper hergestellt, insbesondere werden die Scheuerschutzschicht und der Grundkörper gleichzeitig durch eine Extrusionsanlage, bevorzugt mit mehreren Extrudern oder Plastifiziereinheiten durch Formgebung mittels eines Extrusionswerkzeugs ausgebracht. Selbstverständlich wird jedoch sowohl bei dem Aufextrudieren als auch bei dem Coextrudieren die Scheuerschutzschicht bevorzugt koaxial zu dem Grundkörper hergestellt.

Das Extrudieren der Scheuerschutzschicht erfolgt beispielsweise mithilfe eines Querkopfextruders, insbesondere eines dreizonigen Einschnecken-Extruders. Der Extruder verfügt vorzugsweise über ein Kompressionsverhältnis von mindestens 2,5 und/oder über ein L:D-Verhältnis von mindestens 20 bis höchstens 40, insbesondere von mindestens 25 bis höchstens 30. Der Extruder ist vorzugsweise strömungstechnisch günstig gestaltet, um eine thermische Beschädigung der Scheuerschutzschicht beziehungsweise eines Materials der Scheuerschutzschicht in Totzonen zu vermeiden.

Die Scheuerschutzschicht besteht aus dem thermoplastischen Polyurethan. Das thermoplastische Polyurethan gehört zur Produktklasse der thermoplastischen Elastomere (TPE). Es kann in vernetzter oder in unvernetzter Form eingesetzt werden. Auch kann eine Vernetzung durch einen nachgeschalteten Prozess erfolgen. Die Eigenschaften des Polyurethans können in einem weiten Rahmen anwendungsspezifisch variiert werden. Je nach Vernetzungsgrad und/oder eingesetzter Isocyanat-, Polyol- und Kettenverlängerer-Komponente erhält man ein Duroplast, ein Thermoplast, ein Elastomer oder ein thermoplastisches Elastomer. Das thermoplastische Polyurethan, welches auch als TPU oder TPE-U bezeichnet werden kann, ist ein thermoplastisches Elastomer, also ein Kunststoff, der sich bei Raumtemperatur vergleichbar den klassischen Elastomeren verhält, sich jedoch unter Wärmezufuhr plastisch verformen lässt und somit ein thermoplastisches Verhalten zeigt. Dies ist insbesondere für die Verarbeitung von großer Bedeutung.

Das erfindungsgemäß vorgesehene thermoplastische Polyurethan kann extrudiert, spritzgeformt oder auch blasgeformt werden. Es ist ein Blockpolymer, das bedeutet, dass die Hartsegmente und die Weichsegmente in einem Makromolekül scharf voneinander getrennt sind. Das thermoplastische Polyurethan kann auf gute Hydrolyseeigenschaften, Chemikalienbeständigkeit, Temperaturbeständigkeit, Wärmeformbeständigkeit, Kälteflexibilität, UV- und/oder Ozonstabilität und/oder Festigkeit eingestellt werden. Der E-Modul des thermoplastischen Polyurethans wird vorzugsweise derart eingestellt, dass er zwischen Elastomeren und Polyamiden liegt. Die Härte wird bevorzugt in einem Bereich von 50 Shore (A) bis 98 Shore (A), insbesondere von 85 Shore (A) bis 90 Shore (A), und/oder in einem Bereich von 36 Shore (D) bis 70 Shore (D), insbesondere von 40 Shore (D) bis 42 Shore (D), eingestellt. Dies trägt unter anderem dazu bei, eine Thermoverformbarkeit der Fluidleitung mit geringem Rückstellverhalten zu erzielen. Die Glasübergangstemperatur des Polyurethans liegt vorzugsweise zwischen -20 °C und -40 °C. Hierdurch wird eine ausreichende Kälteflexibilität der Fluidleitung erzielt.

Beispielsweise liegt das themoplastische Polyurethan als kompaktes themoplastisches Polyurethan vorl. Ein solches kompaktes themoplastisches Polyurethan hat vorzugsweise eine Dichte in einem Bereich von 1,05 bis 1,60 g/cm³. Das themoplastische Polyurethan kann jedoch auch geschäumt sein. Das geschäumte themoplastische Polyurethan weist vorzugsweise offenzellige oder geschlossenzellige Poren oder eine Kombination aus offenzelligen und geschlossenzelligen Poren auf. Ferner ist es bevorzugt, dass das geschäumten themoplastische Polyurethan eine geringere Dichte im Vergleich zu dem kompakten themoplastischen Polyurethan aufweist. Vorzugsweise liegt die Dichte des geschäumten themoplastischen Polyurethans in einem Bereich von 0,2 bis 0,9 g/cm³, bevorzugt 0,4 bis 0,6 g/cm³.

Das für die Scheuerschutzschicht verwendete thermoplastische Polyurethan weist beispielsweise eine Dichte von mindestens 1,05 g/cm³ bis höchstens 1,6 g/cm³, insbesondere von mindestens 1,20 g/cm³ bis höchstens 1,30 g/cm³, auf. Bevorzugt besteht die Scheuerschutzschicht aus ungeschäumtem beziehungsweise kompaktem Polyurethan, insbesondere wird hierdurch die vorstehend bezeichnete Dichte erzielt. Zusätzlich oder alternativ weist das Polyurethan beziehungsweise die Scheuerschutzschicht einen Abrieb von höchstens 90 mm³, höchstens 75 mm³, höchstens 50 mm³ oder höchstens 35 mm³ auf. Der Abrieb wird beispielsweise nach DIN ISO 4649 ermittelt. Bevorzugt ist die Scheuerschutzschicht derart ausgestaltet, dass der Scheuertest nach VW-Norm TL 52668 nach 144.000 Zyklen bestanden wird, insbesondere unter Verwendung des Testparameters 1 Hz und/oder 1,5 N. Der Abriebtest beziehungsweise Scheuertest kann bei einer Temperatur von 120 °C bis 160°C vorgenommen werden, insbesondere wird er bei 120 °C, 140 °C oder 160 °C durchgeführt.

Das thermoplastische Polyurethan der Scheuerschutzschicht enthält Polyol, Kettenverlängerer und Isocyanat beziehungsweise weist diese auf oder beinhaltet diese. Beispielsweise besteht das thermoplastische Polyurethan ausschließlich aus dem Polyol, dem Kettenverlängerer und dem Isocyanat und wenigstens einem optionalen Additiv. Zusätzlich können in dem thermoplastischen Polyurethan unvermeidbare Verunreinigungen enthalten sein, allerdings höchstens 2 Gew.-%, bevorzugt höchstens 1 Gew.-% oder höchstens 0,5 Gew.-%. Im Übrigen werden im Rahmen dieser Beschreibung die Begriffe "aufweisen", "enthalten" und "beinhalten" synonym verwendet.

Das Polyol und der Kettenverlängerer reagieren mit dem Isocyanat zu dem thermoplastischen Polyurethan. Unter dem Polyol ist insbesondere ein langkettiges Diol zu verstehen, also eine organische Verbindung, die zwei alkoholische Hydroxygruppen enthalten. Diole sind insoweit zweiwertige Alkohole beziehungsweise Dialkohole. Die Molekulargewichte der Polyole liegen im Bereich 250 g/Mol bis 6000 g/Mol, bevorzugt im Bereich 500 g/Mol bis 4000 g/Mol und besonders bevorzugt im Bereich 1000 g/Mol bis 2000 g/Mol. Das Isocyanat ist ein Ester der Isocyansäure. Bevorzugt liegt das Isocyanat in Form eines Diisocyanats vor, also einem Stoff, welcher zwei Isocyanat-gruppen enthält. Das thermoplastische Polyurethan entsteht durch eine Polyadditionsreaktion aus dem Kettenverlängerer, dem Polyol und dem Isocyanat. Optional können zusätzlich auch ein monofunktioneller Alkohol und/oder ein monofunktionelles Isocyanat als Kettenregler eingesetzt werden, die den Aufbau des Molekulargewichts begrenzen.

Es ist vorgesehen, dass das thermoplastische Polyurethan den Kettenverlängerer, insbesondere 1,4-Butandiol, enthält. Bevorzugt ist der Kettenverlängerer der einzige Kettenverlängerer in dem thermoplastischen Polyurethan. Der Kettenverlängerer ist üblicherweise ein kurzkettiges Diol oder basiert auf einem solchen. Beispielsweise wird als Kettenverlängerer ein1,2-Ethandiol, 1,3-Propandiol, 1,5-Pentandiol, 1,6-Hexandiol, Hydrochinon-Bis (2-hydroxyethyl)-Ether (HQEE), insbesondere 1,4-Butandiol, verwendet. Bei dem Herstellen des thermoplastischen Polyurethans entsteht beispielsweise zunächst ein Prepolymer aus dem Polyol und dem Isocyanat. Das Prepolymer weißt als endständige Gruppen bevorzugt Isocyanat-Gruppen auf. Dies wird durch einen Überschuss an Isocyanat gegenüber dem Polyol erzielt. Das Prepolymer wird nachfolgend zu langkettigen Molekülen durch Reaktion mit dem Kettenverlängerer zum thermoplastischen Polyurethan durch Polyaddition polymerisiert.

Bevorzugt wird das thermoplastische Polyurethan nach dem One Shot-Verfahren, insbesondere bei erhöhter Temperatur hergestellt, beispielsweise bei einer Temperatur von mindestens 60 °C bis höchstens 160 °C. Hierbei werden Polyol und Kettenverlängerer sowie optional ein Kettenregler, ein Additiv und/oder ein Katalysator vorgemischt und dieses Polyolgemisch zum Beispiel direkt in den Einzug eines Reaktionsextruder unter gleichzeitiger Zugabe des Isocyanats dosiert. Beispielsweise kommt ein industrieller Reaktionsextruder der Coperion GmbH mit einem Durchmesser beispielsweise von 92 mm bis 98 mm zum Einsatz. Gegebenenfalls kann das Polyolgemisch mit dem Isocyanat vor der Dosierung in den Reaktionsextruder in einem Hochdruck- oder Niederdruckmischkopf gemischt werden. Einzelne Reaktanten, Katalysator oder Additive können auch in späteren Zonen des Reaktionsextruder zudosiert werden.

Nach Aufbau des Molekulargewischtes im Reaktionsextruder zu einer TPU-Schmelze, wird die Schmelze einer Unterwassergranulierung zugeführt, zum Beispiel einer Unterwassergranulierungseinrichtung der Gala GmbH beziehungsweise der MAAG Automatik GmbH. Das hierbei anfallende TPU-Granulat wird von dem Granulierungswasser abgetrennt und getrocknet. Nachfolgend kann eine Nachreifung bei einer Temperatur von 50 °C bis 120 °C erfolgen. Durch diese erhält das TPU sein endgültiges Molekulargewischt und seine endgültigen Eigenschaften.

Anstelle in einem Reaktionsextruder können die Reaktanten auch auf einem Förderband zur Reaktion gebracht werden. Ein Gemisch aus den Reaktanten wird auf dem Förderband angeordnet beziehungsweise ausgetragen und durchläuft auf diesem verschiedene Heizzonen um das Molekulargewicht aufzubauen. Anschließen kann das reagierte Polymer einer oder mehreren Kühlzonen oder einem Wasserbad zugeführt werden, um die entstandene TPU-Schwarte auf eine granulierfähige Temperatur zu kühlen.

Bekannterweise kann zum Herstellen eines thermoplastischen Polyurethans ein Polyether oder Polyester als Polyol verwendet werden. Das hierbei erhaltene Polyurethan kann als Polyether-Polyurethan beziehungsweise als Polyester-Polyurethan bezeichnet werden. Das Polyether-Polyurethan zeichnet sich durch eine sehr gute Hydrolyse- und Mikrobenstabilität bei gleichzeitig lediglich mäßiger Hitze- beziehungsweise Oxidationsstabilität aus. Das Polyester-Polyurethan hat zwar eine gute Hitze- beziehungsweise Oxidationsstabilität, jedoch lediglich eine mäßige Hydrolyse- und Mikrobenstabilität.

Es ist offensichtlich, dass bei den angestrebten Einsatzbereichen der Fluidleitung die Scheuerschutzschicht besonderen Anforderungen entsprechen muss, insbesondere hinsichtlich ihrer Hitzestabilität. Zudem kann die Fluidleitung insbesondere bei Verwendung im Kraftfahrzeugbereich zeitweise auch mit Spritzwasser beaufschlagt werden, welches beispielsweise mit Tausalz und/oder Mikroben belastet ist. Somit ist für die Scheuerschutzschicht weder Polyether-Polyurethan noch Polyester-Polyurethan geeignet, da keiner dieser Stoffe allen Anforderungen hinsichtlich der Scheuerfestigkeit, der Hydrolyse- und Mikrobenstabilität als auch der Hitzestabilität gleichzeitig gerecht wird. Die Scheuerschutzschicht muss zudem chemisch beständig gegenüber verschiedenen Medien sein, wie beispielsweise Kraftstoff, Schmiermittel, insbesondere Öl und Fett, Kühlmittel, Bremsflüssigkeit, Reinigungsmittel oder dergleichen.

Überraschenderweise hat sich bei Versuchen herausgestellt, dass besonders hervorragende Eigenschaften der Scheuerschutzschicht bei der Verwendung des Polycarbonat-Polyols oder von Polycarbonat-Polyolen als Polyol erzielt werden, sodass für die Scheuerschutzschicht ein Polycarbonat-Polyurethan herangezogen wird. Das Polycarbonat-Polyol ist ein Polyester der Kohlensäure. Es verfügt über eine hervorragende Hitzestabilität, so weist es beispielsweise nach einer Hitzelagerung bei 150 °C über 7 Tage noch eine Zugfestigkeit auf, welche mindestens 90 %, mindestens 92 %, mindestens 94 % oder mindestens 95 % der Ausgangszugfestigkeit entspricht.

Auch eine hinreichende Hydrolysestabilität ist gegeben. Nach einer Wasserlagerung bei 80 °C weist das thermoplastische Polyurethan auf Basis des Polycarbonat-Polyols nach 14 Tagen mindestens 80 %, nach 28 Tagen mindestens 77 %, nach 42 Tagen mindestens 75 % und nach 56 Tagen mindestens 72 % der Ausgangszugfestigkeit auf. Bevorzugt sind die Werte jedoch höher und betragen beispielsweise nach 14 Tagen mindestens 81 % oder mindestens 83 %, nach 28 Tagen mindestens 78 % oder mindestens 80 %, nach 42 Tagen mindestens 76 % oder mindestens 78 % und nach 56 Tagen mindestens 73 % oder mindestens 75 % der Ausgangszugfestigkeit. Auch noch höhere Werte sind erzielbar, nämlich nach 14 Tagen mindestens 98 % oder mindestens 99 %, nach 28 Tagen mindestens 86 % oder mindestens 87 %, nach 42 Tagen mindestens 82 % oder mindestens 84 % und nach 56 Tagen mindestens 81 % oder mindestens 83 %.

Die somit erhaltene Scheuerschutzschicht ist in besonderem Maße für eine Fluidleitung geeignet, welche unter wechselnden Umgebungsbedingungen verwendet wird, beispielsweise in dem Motorraum des Kraftfahrzeugs. Dort ist die Fluidleitung einer wechselnden Temperatur, einer wechselnden Feuchtigkeit und wechselnden chemischen Umgebungsbedingungen ausgesetzt. Mit der beschriebenen Scheuerschutzschicht wird eine äußerst langlebige und flexibel einsetzbare Fluidleitung geschaffen.

Als Polyole kommen organische Polycarbonat-Polyole, zum Beispiel basierend auf Dimethylcarbonat und aliphatischen Diolen, mit einem mittleren Molekulargewicht von 250 g/Mol bis 4000 g/Mol, bevorzugt mit einem mittleren Molekulargewischt von 1000 g/Mol bis 3000 g/Mol in Betracht, die auch im Handel erhältlich sind, beispielsweise von UBE Industries Ltd. oder Caffaro Industrie SPA. Geeignete Polycarbonat-Polyole sind unter anderem Ethernacoll UH-50, Ethernacoll UH-100, Ethernacoll UH-200, Ethernacoll UH-300, Ethernacoll PH-50, Ethernacoll PH-100, Ethernacoll PH-200, Ethernacoll PH-300, Ravecarb 101, Ravecarb 102, Ravecarb 103, Ravecarb 106, Ravecarb 107, Ravecarb 108, Ravecarb 109, Ravecarb 111, Ravecarb 291, Ravecarb 292, Ravecarb 293, Ravecarb 294, Ravecarb 295.

Eine Weiterbildung der Erfindung sieht vor, dass das Isocyanat ein Diphenylmethan-4,4'-diisocyanat ist. Allgemeiner ausgedrückt ist das Isocyanat ein aromatisches Isocyanat. Der angegebene Stoff ist in besonderem Maße zur Herstellung der Scheuerschutzschicht aus dem thermoplastischen Polyurethan geeignet.

Eine Weiterbildung der Erfindung sieht vor, dass das vorzugsweise thermoplastische Polyurethan zusätzlich einen Abriebverbesserer aufweist. Der Abriebverbesserer verbessert das Abriebverhalten der Scheuerschutzschicht, verringert also den Abrieb bei mechanischer Belastung. Der Abriebverbesserer wird dem vorzugsweise thermoplastischen Polyurethan bevorzugt mit einem Anteil von mindestens 0,05 Gew.-% bis höchstens 20 Gew.-% beigemengt, jeweils bezogen auf das Gesamtgewicht des thermoplastischen Polyurethans. Besonders bevorzugt beträgt der Anteil mindestens 1 Gew.-% und höchstens 3 Gew.-%, mindestens 1,25 Gew.-% und höchstens 2,75 Gew.-%, mindestens 1,5 Gew.-% und höchstens 2,5 Gew.-% oder mindestens 1,75 Gew.-% und höchstens 2,25 Gew.-%. Zum Beispiel ist der Anteil in etwa oder genau 2 Gew.-%. Insbesondere wird der Abriebverbesserer dem thermoplastischen Polyurethan als Additiv beigegeben, sodass die Ausführungen für Additive ergänzend herangezogen werden können.

Als Abriebverbesserer kommen organische, vorzugsweise polymere Materialien, in Betracht. Diese polymeren Materialien sind vorzugsweise thermoplastisch. Vorzugsweise beinhalten die Abriebverbesserer mindestens 70 Gew.-%, vorzugsweise mindestens 80 Gew.-% und besonders bevorzugt mindestens 90 Gew.-%, jeweils bezogen auf das Gesamtgewicht des Abriebverbesserers, mindestens ein polymeres Material.

Vorzugsweise zeigt das polymere Material oder der Abriebverbesserer, da dieser auf dem polymeren Material basiert, oder zeigen beide eine Schmelzfluss-Rate - Englisch Melt Mass-Flow Rate (MFR) - bei 10.0 kg und 230 °C in einem Bereich von 3 bis 25 g/10mn, vorzugsweise in einem Bereich von 5 bis 20 g/10mn und besonders bevorzugt in einem Bereich von 6 bis 15 g/10mn, bestimmt gemäß ISO 1133.

Vorzugsweise zeigt das polymere Material oder der Abriebverbesserer, da dieser auf dem polymeren Material basiert, oder zeigen beide eine Dichte in einem Bereich von 0,6 bis 1,1 g/cm³, bevorzugt in einem Bereich von 0,7 bis 1,0 g/cm³, besonders bevorzugt in einem Bereich von 0,75 bis 0,95 g/cm³ und weiterhin bevorzugt in einem Bereich von 0,83 bis 0,92 g/cm³.

Bevorzugte polymere Materialen basieren zu einem Anteil auf einem olefinischen Säureanhydrid. Vorzugsweise liegt dieser Anteil in einem Bereich von 0,001 bis 20 Gew.-%, bevorzugt in einem Bereich von 0,005 bis 15 Gew.-%, besonders bevorzugt in einem Bereich von 0,01 bis 5 Gew.-%, weiterhin bevorzugt in einem Bereich von 0,05 bis 2,5 Gew.-% und zudem bevorzugt in einem Bereich von 0,1 bis 1,5 Gew.-%, jeweils bezogen auf das Gesamtgewicht des polymeren Materials.

Bevorzugt bilden olefinische Säureanhydride die Basis für eine davon abgeleitete Wiederholungseinheit in dem polymeren Material. Bevorzugte olefinische Säureanhydride sowie die sich von diesen ableitenden Wiederholungseinheiten weisen mindestens 4 C-Atome und mindestens 3 O-Atome auf. Olefinische Säureanhydride sowie die sich von diesen ableitenden Wiederholungseinheiten weisen beispielsweise nicht mehr als 12 C-Atome und/oder nicht mehr als 10 O-Atome auf. Ein bevorzugtes olefinisches Säureanhydrid ist Maleinsäureanhydrid und die sich daraus abgeleitete Wiederholungseinheiten.

Vorzugsweise werden olefinische Säureanhydride durch Pfropf-Reaktion in das polymere Material eingearbeitet. Folglich sind mit olefinische Säureanhydride gepfropfte als Abriebverbesserer bevorzugt.

Bevorzugte polymere Materialen basieren zu einem weiteren Anteil auf einem Hauptpolymer. Vorzugsweise liegt dieser Anteil bei mindestens 40 Gew.-%, bevorzug bei mindestens 50 Gew.-%, besonders bevorzugt bei mindestens 70 Gew.-% und weiterhin bevorzugt bei mindestens 80 Gew.-%, jeweils bezogen auf das Gesamtgewicht des polymeren Materials.

Bevorzugte Hauptpolymere weisen eine Kohlenstoffkette auf. Dieses Kohlenstoffkette bildet vorzugsweise die Polymerhauptkette dieser polymeren Materialen. Bevorzugt basiert das Hauptpolymer auf einem Olefin, vorzugsweise ausgewählt aus der Gruppe bestehend aus Ethylen, Propylen, Buten, Isopren, Butadien, Penten, Hexen, Hepten, Octen oder eine Kombination aus mindestens zwei davon. Bevorzugt ist das Hauptpolymer ausgewählt aus der Gruppe bestehend aus Polyethylen, Polypropylen, Ethylen-Propylen-Copolymer, Ethylen-Vinylacetat-Copolymer oder mindestens zwei davon, wobei das Hauptpolymer bevorzugt auf Ethylen und Propylen basiert oder das Hauptpolymer bevorzugt eine Polyethylen-Propylen-Copolymer ist..

Geeignete polymere Materialen wie Maleinsäureanhydrid-Pfropfmaterialien sind auch im Handel erhältlich, z.B. von der Union Carbide Corporation, der Exxon Chemical Company, DuPont Industrial Polymers oder Uniroyal Chemical. Geeignete Materialien sind unter anderem: VLDPE, gepfropft mit etwa 0,9 Gew.-% Maleinsäureanhydrid (MAH), wie z.B. Union Carbide DEFB 1373NT; VLDPE, gepfropft mit etwa 0,8 Gew.-% MAH, wie z.B. Union Carbide DEFB 1372NT; HDPE, gepfropft mit DuPont Fusabond E MB-100D (0,9% MAH) und Uniroyal Polybond 3009; LLDPE, gepfropft mit etwa 0,9% MAH, wie z.B. DuPont Fusabond E MB-226D; LLDPE, gepfropft mit etwa 0,65 % MAH, wie z.B. DuPont Fusabond E BA-413D; Ethylen-Propylen-Pfropfmaterialien, wie z.B. DuPont Fusabond N MF-416D (0,9 % MAH) und DuPont Fusabond N MF-418D (0,3 % MAH); EPDM-Pfropfmaterialien, wie Exxon Exxelor VA 1801 (teilkristallin, 0,6 % MAH-Pfropfung), Exxon Exxelor VA 1803 (amorph, 0,7 % MAH-Pfropfung), Exxon Exxelor VA 1810 (teilkristallin, 0,5 % MAH-Pfropfung), Exxon Exxelor VA 1820 (teilkristallin, 0,3 % MAH-Pfropfung), DuPont Fusabond N MF-274D (0,3 % MAH), Uniroyal Chemical Royaltuf EDPM 490, und Uniroyal Chemical Royaltuf EDPM 485; Polypropylen-Pfropfmaterialien, wie Exxon Exxelor PP1015 (0,4 % MAH), DuPont Fusabond P MZ-109D (0,55 % MAH), DuPont Fusabond P MZ-353D (1,4 % MAH), Uniroyal Polybond 3150 und Uniroyal Polybond 3200; Ethylenacrylat-Terpolymer, das mit etwa 0,85 % MAH gepfropft ist, wie DuPont Fusabond A MG-423D; und Ethylenvinylacetat (VA), das mit etwa 0,8 % MAH gepfropft ist, wie DuPont Fusabond C MC-190D (28% VA) und DuPont Fusabond C MC-197D (18 % VA).

Mit dem Abriebverbesserer kann das Abriebverhalten deutlich verbessert werden. So ergibt sich beispielsweise durch eine Zugabe von 2 Gew.-% des Abriebverbesserers gegenüber einem Material ohne Abriebverbesserer eine Reduzierung des relativen Volumenverlusts und des Masseverlusts jeweils um mehr als ein Drittel. Der Abriebwiderstandsindex konnte hingegen um mehr als 45 % gesteigert werden.

Eine Weiterbildung der Erfindung sieht vor, dass das thermoplastische Polyurethan zusätzlich mindestens einen der folgenden Stoffe als Additiv enthält: ein Gleitmittel; ein Wachs; ein phenolisches Antioxidans; ein aminisches Antioxidans; ein Thioester-basierendes Antioxidans; ein Phosphit; einen UV-Absorber, insbesondere basierend auf Benztriazol oder Triazin; ein sterisch gehindertes Amin; ein Hydrolyseschutzmittel, insbesondere ein Carbodiimid; ein Antistatikum; ein Flammschutzmittel und ein Ethylen-Copolymer als Abriebverbesserer. Beispielsweise wird lediglich einer der genannten Stoffe als Additiv verwendet oder es werden mehrere der genannten Stoffe als Additive dem thermoplastischen Polyurethan beigemengt. Die genannten Stoffe beziehungsweise Additive dienen dazu, einzelne Eigenschaften des Polyurethans weiter zu verbessern. So kann das Gleitmittel oder das Wachs, beispielsweise in Form eines Gleitwachses, neben verbesserter Entformung auch die Scheuer-beziehungsweise Abriebbeständigkeit weiter verbessern, insbesondere auch bei hohen Temperaturen.

Das sterisch gehinderte Amin, welches auch als "Hindered Amine Light Stabilizer" (HALS) bezeichnet werden kann, ist eine chemische Verbindung, die Amine als funktionelle Gruppe enthalten. Es kommt insbesondere zum Schutz vor Oxidation, insbesondere in Kombination mit Licht und Temperatur, und/oder als UV-Stabilisator zum Einsatz. Das Hydrolyseschutzmittel als Säurefänger dient insbesondere zusätzlich dem Schutz der Scheuerschutzschicht vor Einflüssen durch Hydrolyse, sodass sich eine besonders gute Langlebigkeit der Fluidleitung ergibt. Das Ethylen-Copolymer kommt bevorzugt zur weiteren Verbesserung der Scheuer- beziehungsweise Abriebbeständigkeit und somit als Abriebverbesserer zum Einsatz. Besonders bevorzugt liegt es in Form eines maleinsäureanhydrid-modifizierten Ethylen-Copolymers vor. Von den genannten Stoffen wird wenigstens eines als Additiv verwendet, bevorzugt kommen jedoch mehrere als Additive zum Einsatz. Besonders bevorzugt findet zumindest das Ethylen-Copolymer als Additiv Verwendung. Zusätzlich kann wenigstens eines der genannten Additive verwendet werden.

Eine Weiterbildung der Erfindung sieht vor, dass das Additiv einen Anteil von mindestens 0,05 Gew.-% und/oder höchstens 10 Gew.-%, bevorzugt von mindestens 0,1 Gew.-% bis höchstens 7 Gew.-%, weiter bevorzugt von mindestens 0,15 Gew.-% bis 3 Gew.-%, aufweist, jeweils bezogen auf das Gesamtgewicht des thermoplastischen Polyurethans. Bevorzugt beträgt der Anteil mindestens 0,1 Gew.-% und höchstens 7 Gew.-% oder mindestens 0,15 Gew.-% und höchstens 3 Gew.-%. Bevorzugt kann jedes der genannten Additive jeweils mit dem genannten Anteil beigemengt werden- Der jeweilige Anteil ist stets auf die Gesamtmenge des thermoplastischen Polyurethans bezogen. Werden dem thermoplastischen Polyurethan mehrere Additive zugesetzt, so beträgt ihr Gesamtanteil an dem Polyurethan höchstens 10 Gew.-%, vorzugsweise jedoch deutlich weniger, insbesondere höchstens 7,5 Gew.-%, höchstens 5 Gew.-%oder höchstens 2,5 Gew.-%.

Das Additiv kann dem Polyurethan unmittelbar bei seiner Herstellung zugesetzt werden, sodass also das Additiv dem Polyol und dem Isocyanat beigemengt und hieraus das Polyurethan hergestellt wird. Alternativ kann es vorgesehen sein, dass das Additiv dem Polyurethan in einem zusätzlichen Compoundierungsschritt zugesetzt wird. In jedem Fall wird durch das Hinzufügen des Additivs mit dem genannten Anteil eine weitere Verbesserung der Eigenschaften des thermoplastischen Polyurethans erzielt. Im Übrigen können während des Compoundierungsschritts der Scheuerschutzschicht auch weitere Polymere zugesetzt werden. Dies kann jedoch auch bereits zuvor während der Herstellung, also der Polyaddition, geschehen.

Im Übrigen kann das Additiv beziehungsweise können die Additive sowohl als unveränderte Reinsubstanz, als auch hochkonzentriert gebunden in einem Träger, bevorzugt einem polymeren Träger (sogenanntem Masterbatch oder Konzentrat), bei der Herstellung des thermoplastischen Polyurethans und/oder bei einem zusätzlichen Compoundierungsschritt und/oder bei der Extrusion der Scheuerschutzschicht auf den Grundkörper der Fluidleitung eingebracht werden.

Die Fluidleitung verfügt über den Grundkörper und die auf den Grundkörper aufgebrachte Scheuerschutzschicht. Beispielsweise weist der Grundkörper eine erste Schicht aus einem Fluorpolymer, eine unmittelbar auf die erste Schicht folgende zweite Schicht aus einem Polyamid und eine unmittelbar auf die zweite Schicht folgende dritte Schicht auf. Die genannten Schichten folgen jeweils unmittelbar aufeinander, sodass also die zweite Schicht unmittelbar an der ersten Schicht und die dritte Schicht unmittelbar an der zweiten Schicht anliegt. In anderen Worten ist die zweite Schicht zwischen der ersten Schicht und der dritten Schicht angeordnet und liegt einerseits an der ersten Schicht und andererseits an der dritten Schicht an. Vorzugweise ist die erste Schicht und/oder die zweite Schicht und/oder die dritte Schicht jeweils für sich genommen materialeinheitlich ausgestaltet, sodass die jeweilige Schicht vollständig und durchgehend aus dem jeweils bezeichneten Material besteht.

Die erste Schicht der Fluidleitung kann zumindest teilweise, vorzugsweise jedoch vollständig, aus dem Fluorpolymer bestehen. Unter dem Fluorpolymer ist ein fluoriertes Polymer zu verstehen. Es zeichnet sich durch eine hohe Beständigkeit gegenüber Chemikalien und hohen Temperaturen, in anderen Worten also durch eine hohe Chemikalienbeständigkeit und/oder über hohe Temperaturbeständigkeit aus. Das Fluorpolymer kann grundsätzlich beliebig ausgestaltet sein. Beispielsweise liegt es in Form von Ethylen-Tetrafluorethylen-Copolymer (ETFE), Polytetrafluorethylen (PTFE), Tetrafluorethylen-Hexafluorpropylen-Copolymer (FEP), Polychlortrifluorethylen (PCTFE) oder Ethylen-Tetrafluorethylen-Hexafluorpropylen (EFEP) vor. Es sei jedoch darauf hingewiesen, dass die erste Schicht auch aus einem anderen Material bestehen kann.

Die zweite Schicht besteht aus Polyamid, beispielsweise aus PA6, PA612, PA6/66, PA616 oder einem teilaromatischen Polyamid. Unter dem teilaromatischen Polyamid ist ein teilweise kristallines aromatisches Polyamid zu verstehen, welches auch als Polyphthalamid (PPA) bezeichnet werden kann. Das Polyamid kann zur Verbesserung seiner mechanischen Festigkeit verstärkt sein und hierzu einen Zusatzstoff oder eine Faserverstärkung aufweisen. Als Zusatzstoff kommt beispielsweise gemahlenes Glas beziehungsweise gemahlenes Siliziumdioxid zum Einsatz. Die Faserverstärkung liegt beispielsweise in Form einer Glasfaserverstärkung, einer Kohlenstofffaserverstärkung oder einer Aramidfaserverstärkung vor. Die zweite Schicht beziehungsweise das Polyamid kann jedoch auch verstärkungsfrei ausgestaltet sein.

Die dritte Schicht besteht beispielsweise wiederum aus einem Polyamid, insbesondere einem aliphatischen Polyamid, oder aus Ethylen-Vinylalkohol-Copolymer (auch als EVOH oder EVAL bezeichnet). Das Polyamid ist beispielsweise wiederum PA6, PA66, PA612, PA6/66, PA616 oder PPA. Unter dem Ethylen-Vinylalkohol-Copolymer ist ein Copolymer zu verstehen, das formal aus den Monomeren Ethylen und Vinylalkohol aufgebaut ist. Das Ethylen-Vinylalkohol-Copolymer ist ein preiswerter Sperrschichtwerkstoff mit guter Sperrwirkung gegenüber flüchtigen organischen Verbindungen. Das aliphatische Polyamid weist ein Monomer auf, das sich von aliphatischen Grundkörpern ableitet, beispielsweise aus einem Lactam, insbesondere einem Epsilon-Caprolactam, oder aus Hexamethylendiamin und Adipinsäure.

Es kann vorgesehen sein, dass der Grundkörper ausschließlich aus den drei genannten Schichten besteht, sodass die erste Schicht als Innenschicht und die dritte Schicht als Außenschicht vorliegt. In diesem Fall dient also die erste Schicht der Führung eines Fluids in der Fluidleitung, wobei die hervorragende Beständigkeit des Fluorpolymers genutzt wird. Die beschriebene Fluidleitung, bestehend aus den drei Schichten, weist hervorragende Festigkeitseigenschaften, sowie eine hohe Beständigkeit auf. Es kann jedoch auch vorgesehen sein, zusätzlich zu den bereits genannten drei Schichten wenigstens eine weitere Schicht der Fluidleitung zuzuschlagen. Bevorzugt stellt jedoch die erste Schicht stets die Innenschicht dar. An die erste Schicht schließen sich stets die zweite Schicht und die dritte Schicht an, wobei die zweite Schicht unmittelbar an die erste Schicht und die dritte Schicht unmittelbar an die zweite Schicht angrenzt.

Eine weitere Ausgestaltung der Erfindung sieht vor, dass die Scheuerschutzschicht auf eine Au-ßenschicht des Grundkörpers aufgebracht wird, die aus Polyamid, Polypropylen oder Polyphthalamid besteht. Beispielsweise besteht der Grundkörper insgesamt aus einem dieser Materialien oder weist eines dieser Materialien zumindest auf. Ist der Grundkörper mehrschichtig aufgebaut, so bildet die zuäußerst liegende der Schichten die Außenschicht. Eine derartige Ausgestaltung der Fluidleitung ist besonders widerstandsfähig gegenüber äußeren Einflüssen.

Eine weitere Ausführungsform der Erfindung sieht vor, dass der Grundkörper vor und/oder bei seinem Herstellen, insbesondere dem Extrudieren, und/oder die Fluidleitung nach dem Aufbringen der Scheuerschutzschicht gekühlt wird. Das Kühlen des Grundkörpers stellt sicher, dass während des Aufbringens der Scheuerschutzschicht auf den Grundkörper, insbesondere während des Extrudierens, eine Formänderung des Grundkörpers weitestgehend oder sogar vollständig vermieden wird. Hierdurch ist eine besonders hohe Formtreue der Fluidleitung erzielbar.

Eine Weiterbildung der Erfindung sieht vor, dass bei dem Herstellen der Fluidleitung das thermoplastische Polyurethan abwechselnd mit einem anderen Stoff auf den Grundkörper aufgebracht wird. Das Abwechseln zwischen dem Polyurethan und dem anderen Stoff erfolgt vorzugsweise in Längsrichtung der Fluidleitung, also in axialer Richtung bezüglich einer Längsmittelachse der Fluidleitung. Der andere Stoff ist beispielsweise derart gewählt, dass er leichter von dem Grundkörper ablösbar ist als das Polyurethan. Insbesondere wird als anderer Stoff ein gummihaltiger Stoff verwendet. Dieser kann dieselbe Farbe aufweisen wie das Polyurethan oder eine andere Farbe. Der andere Stoff kann derart gewählt sein, dass er abwaschbar ist oder durch mechanische, thermische oder chemische Behandlung von dem Grundkörper lösbar ist. Durch das Abwechseln der Aufbringung des Polyurethans und des anderen Stoffs werden ein Abmanteln der Fluidleitung und damit eine Installation der Fluidleitung deutlich vereinfacht.

Zusätzlich oder alternativ kann es vorgesehen sein, dass das thermoplastische Polyurethan beziehungsweise die Scheuerschutzschicht mit einer variablen Schichtdicke ausgebildet wird. In anderen Worten wird die Schichtstärke in Längsrichtung und/oder in Umfangsrichtung der Fluidleitung verändert, sodass sie an einer ersten Stelle einen ersten Wert und an einer zweiten Stelle einen von dem ersten Wert verschiedenen zweiten Wert aufweist. Hierzu kann zum Beispiel eine Extrusionsgeschwindigkeit und/oder die Menge des thermoplastischen Polyurethans über der Zeit beziehungsweise der Längserstreckung der Fluidleitung variiert werden.

Eine bevorzugte weitere Ausführungsform der Erfindung sieht vor, dass zwischen dem thermoplastischen Polyurethan und den Grundkörper ein Haftvermittler aufgebracht wird, insbesondere lediglich bereichsweise. Der Haftvermittler dient einer besseren Anhaftung des Polyurethans an dem Grundkörper. Der Haftvermittler kann bereichsweise entfallen, sodass an der Fluidleitung abwechselnd Bereiche mit Haftvermittler und ohne Haftvermittler vorliegen. Diese Bereiche wechseln sich vorzugsweise wiederum in axialer Richtung bezüglich der Längsmittelachse der Fluidleitung ab. Hierdurch wird wiederum ein einfaches Abmanteln der Fluidleitung realisiert.

Eine bevorzugte weitere Ausgestaltung der Erfindung sieht vor, dass die Fluidleitung nach dem Aufbringen der Scheuerschutzschicht einer thermischen Nachbehandlung unterzogen wird, und/oder dass dem thermoplastischen Polyurethan vor dem Aufbringen ein Vernetzer und/oder Vernetzungsbeschleuniger beigemengt wird. Nach dem Ausbilden der Scheuerschutzschicht auf den Grundkörper wird sich über die Zeit eine Nachvernetzung des Polyurethans ergeben. Hierbei nehmen die Härte, die Reißfestigkeit und die Verschleißfestigkeit weiter zu. Eine eventuelle Restklebeneigung nimmt hingegen ab. Diese Nachvernetzung ist ein zeitlicher Prozess, der auch unter normalen Lagerbedingungen stattfindet, mit höheren Temperaturen jedoch beschleunigt werden kann. Um die Nachvernetzung durchzuführen, ist es bevorzugt vorgesehen, das thermoplastische Polyurethan vernetzungsfähig auszubilden und/oder ihm den Vernetzer und/oder Vernetzungsbeschleuniger beizumengen, insbesondere während des Extrudierens. Der Vernetzungsbeschleuniger beschleunigt die Nachvernetzung und/oder ermöglicht sie erst.

Bevorzugt wird die Fluidleitung der thermischen Nachbehandlung unterzogen, insbesondere zeitnah nach dem Aufbringen der Scheuerschutzschicht auf den Grundkörper. Im Rahmen der thermischen Nachbehandlung wird die Fluidleitung beispielsweise auf mindestens 50 °C bis höchstens 120 °C, vorzugsweise mindestens 80 °C bis höchstens 100 °C erwärmt. Die thermische Nachbehandlung wird vorzugweise über mindestens 12 Stunden bis höchstens 72 Stunden, insbesondere mindestens 24 Stunden bis höchstens 48 Stunden, durchgeführt. Zusätzlich oder alternativ kann die Fluidleitung einer Behandlung mit UV-Strahlung unterzogen werden. Im Rahmen der Nachvernetzung kann ein Schrumpfen der Scheuerschutzschicht auftreten, die die mechanische Anbindung der Scheuerschutzschicht an den Grundkörper weiter verbessert.

Eine bevorzugte Ausgestaltung der Erfindung sieht vor, dass die Scheuerschutzschicht aus mehreren Teilschichten ausgebildet wird, wobei die Teilschichten aus unterschiedlichen Materialien bestehen. Hierauf wurde vorstehend bereits hingewiesen. Vorzugsweise bestehen die Teilschichten jeweils aus Polyurethan, insbesondere aus unterschiedlichen Polyurethanen. Hierdurch kann insbesondere das Einbringen des Heizleiters und/oder der Metallschicht vereinfacht werden.

Eine Weiterbildung der Erfindung sieht vor, dass die Scheuerschutzschicht wenigstens bereichsweise mit Lufteinschlüssen ausgebildet wird. Mithilfe der Lufteinschlüsse wird eine Wärmeleitfähigkeit der Scheuerschutzschicht reduziert, sodass insgesamt eine gute thermische Isolation der Fluidleitung erzielt wird. Die Lufteinschlüsse werden beispielsweise ausgebildet, falls die Fluidleitung als Kühlmittelleitung oder als Kraftstoffleitung ausgebildet ist. Das thermoplastische Polyurethan weist bevorzugt von sich aus bereits eine recht geringe thermische Leitfähigkeit im Bereich von höchstens 0,19 W/(mK) bis höchstens 0,25 W/(mK) auf. Diese Leitfähigkeit wird durch die Lufteinschlüsse weiter verringert. Beispielsweise sind die Lufteinschlüsse stochastisch in dem Polyurethan verteilt. Dies kann beispielsweise durch ein Aufschäumen des Polyurethans erzielt werden. Das Aufschäumen erfolgt vorzugsweise bei dem Aufbringen und/oder Extrudieren der Scheuerschutzschicht. Bevorzugt sind die Lufteinschlüsse derart ausgebildet, dass die Wärmeleitfähigkeit der Scheuerschutzschicht mit den Lufteinschlüssen höchstens 75 %, höchstens 60 % oder höchstens 50 % beträgt wie ohne die Luftscheinschlüsse. Bevorzugt weist die Scheuerschutzschicht jedoch ungeschäumtes thermoplastisches Polyurethan gemäß der vorliegenden Beschreibung auf beziehungsweise besteht aus diesem.

Es kann im Rahmen einer weiteren Ausgestaltung der Erfindung vorgesehen sein, dass der Grundkörper vor dem Aufbringen mit einer Oberflächenstruktur versehen wird. Die Oberflächenstruktur ist beispielsweise eine Wellstruktur, sodass der Grundkörper als gewellte Fluidleitung vorliegt. Die wellenartige Struktur des Grundkörpers liegt dabei in axialer Richtung bezüglich der Längsmittelachse der Fluidleitung vor, sodass sich also in axialer Richtung Bereiche mit größerem Durchmesser mit Bereichen mit kleinerem Durchmesser abwechseln. Auch andere Oberflächenstrukturen können selbstverständlich realisiert sein. Durch das Ausbilden der Oberflächenstruktur wird zum einen das Anhaften der Scheuerschutzschicht an dem Grundkörper verbessert. Zum anderen kann die Fluidleitung mit verbesserten Biegeeigenschaften versehen werden.

Eine weitere Ausgestaltung der Erfindung sieht vor, dass zwischen dem Grundkörper und der Scheuerschutzschicht und/oder in der Scheuerschutzschicht eine Zusatzschicht angeordnet wird, insbesondere bei dem Aufbringen und/oder Extrudieren der Scheuerschutzschicht. Die Zusatzschicht dient beispielsweise der Verbesserung des Scheuerschutzes und/oder der Flammenbeständigkeit. Zusätzlich kann mithilfe der Zusatzschicht eine Wärmeleitfähigkeit der Fluidleitung verbessert und/oder ein elektrischer Widerstand verringert werden. Beispielsweise sorgt die Zusatzschicht für eine gleichmäßige Temperaturverteilung bei einem Heizen der Fluidleitung mittels einer Heizeinrichtung, insbesondere eines Heizleiters, vor allem, falls die Zusatzschicht in Form einer Metallschicht vorliegt. Der Heizleiter kann in die Zusatzschicht integriert oder wärmeleitend mit ihr verbunden sein, insbesondere mit ihr in Berührkontakt stehen. Die Zusatzschicht wird vorzugsweise während des Aufbringens der Scheuerschutzschicht aufgebracht. Beispielsweise wird sie bei dem Aufbringen auf den Grundkörper aufgebracht und mit der Scheuerschutzschicht ummantelt. Die Scheuerschutzschicht deckt insoweit die Zusatzschicht vorzugsweise vollständig ab.

Es kann auch vorgesehen sein, dass die Zusatzschicht in die Scheuerschutzschicht integriert wird. Hierbei wird bei ihrem Aufbringen die Scheuerschutzschicht derart ausgebildet und die Zusatzschicht derart angeordnet, dass die Zusatzschicht nachfolgend durch die Scheuerschutzschicht von dem Grundkörper beabstandet gehalten und von ihr abgedeckt ist. Die Zusatzschicht besteht beispielsweise aus wenigstens einem der nachfolgend genannten Metalle oder weist dieses zumindest auf: Aluminium, Kupfer, Eisen, Stahl und Zinn. Insoweit kann die Zusatzschicht auch als Metallschicht bezeichnet werden. Vorzugsweise besteht die Zusatzschicht aus lediglich einem einzigen der genannten Metalle oder weist dieses auf. Sie kann jedoch auch mehrere der Metalle aufweisen oder aus ihnen bestehen. Die Zusatzschicht kann ausschließlich aus dem Metall bestehen. Zusätzlich oder alternativ zu dem Metall kann die Zusatzschicht jedoch auch ein anderes Material enthalten oder aus diesem bestehen, wobei als anderes Material beispielsweise ein Kunststoff oder dergleichen verwendet wird. Das andere Material kann ein textiles Material sein, also insbesondere aus wenigstens einer Naturfaser und/oder wenigstens einer Chemiefaser bestehen.

Eine Weiterbildung der Erfindung sieht vor, dass als Zusatzschicht eine Folie oder ein Flächengebilde, insbesondere ein Gewebe, Gewirke, Gestrick oder Geflecht, verwendet wird. Die Zusatzschicht kann auf unterschiedliche Art und Weise vorteilhaft ausgebildet sein. Beispielsweise liegt sie in Form einer Folie vor, ist also durchgehend ausgestaltet. Hierdurch werden eine besonders gute Wärmeleitfähigkeit und ein besonders geringer elektrischer Widerstand der Fluidleitung erzielt. Die Folie führt jedoch zu einer vergleichsweise steifen Fluidleitung. Es kann daher vorgesehen sein, anstelle der Folie das Flächengebilde beziehungsweise textile Flächengebilde zu verwenden, welches aus Metall und/oder dem anderen Material besteht oder dieses zumindest aufweist. Hinsichtlich des Materials der Zusatzschicht wird auf die weiteren Ausführungen im Rahmen dieser Beschreibung verwiesen.

Die Abriebfestigkeit der Fluidleitung kann durch das Ausbilden einer Oberflächenstruktur auf der Scheuerschutzschicht weiter verbessert werden. Hierzu werden beispielsweise während des Aufbringens der Scheuerschutzschicht, insbesondere während des Extrudierens beziehungsweise durch das Extrudieren, auf der Scheuerschutzschicht Längsstreifen ausgebildet, die sich bezüglich einer Längsmittelachse der Fluidleitung in axialer Richtung erstrecken, insbesondere durchgehend erstrecken. Zusätzlich oder alternativ können auf der Scheuerschutzschicht Querstreifen oder eine Kreuzstruktur aus Längsstreifen und Querstreifen ausgebildet werden. Bevorzugt ist es vorgesehen, dass bei dem Extrudieren das thermoplastische Polyurethan in Form eines Granulats zugeführt wird. Zur Verbesserung der Extrudierbarkeit kann dem Granulat ein Gleitmittel beigemengt sein. Selbstverständlich ist es auch möglich, das thermoplastische Polyurethan vor dem Aufbringen zu färben. Hierzu wird beispielsweise das Granulat gefärbt beziehungsweise dem Granulat ein Farbbatch beziehungsweise ein Farbmasterbatch beigemengt.

Zur zusätzlichen Erhöhung der Sicherheit kann es vorgesehen sein, dass die Scheuerschutzschicht mit einer Flammschutzschicht versehen wird. Die Flammschutzschicht ist hierbei vorzugweise in die Scheuerschutzschicht integriert, sodass die Scheuerschutzschicht weiterhin eine Außenschicht der Fluidleitung darstellt. Das Integrieren der Flammschutzschicht in die Scheuerschutzschicht erfolgt zum Beispiel durch das Beimengen eines Flammschutz-Masterbatches zu dem thermoplastischen Polyurethan. Zusätzlich oder alternativ kann es vorteilhafterweise vorgesehen sein, zwischen dem Grundkörper und der Scheuerschutzschicht eine Metallschicht anzuordnen, und/oder die Fluidleitung mit wenigstens einem Heizleiter zu versehen. Die Metallschicht dient beispielsweise zur Erhöhung einer Flammenbeständigkeit der Fluidleitung. Die Metallschicht weist beispielsweise ein Metallgeflecht oder eine Metallfolie auf, die zwischen dem Grundkörper und der Scheuerschutzschicht angeordnet ist. Die Metallschicht kann vor dem Aufbringen beziehungsweise Extrudieren der Scheuerschutzschicht oder während des Aufbringens beziehungsweise Extrudierens auf den Grundkörper aufgebracht werden. Nach dem Aufbringen beziehungsweise Extrudieren ist die Metallschicht von der Scheuerschutzschicht zuverlässig an dem Grundkörper gehalten.

Zusätzlich oder alternativ kann der Heizleiter an beziehungsweise in der Fluidleitung vorliegen. Beispielsweise ist der Heizleiter in dem Grundkörper eingebettet oder liegt zwischen dem Grundkörper und der Scheuerschutzschicht vor. Der Heizleiter dient einem Beheizen der Fluidleitung mit elektrischer Energie. Insoweit ist in die Fluidleitung eine elektrische Heizung integriert. Beispielweise kann mit einer solchen ein Erstarren des Fluids in der Fluidleitung unterbunden werden beziehungsweise ein erstarrtes Fluid wieder aufgetaut werden. Während es selbstverständlich vorgesehen sein kann, dass der Heizleiter nach dem Ausbilden der Fluidleitung an dieser befestigt werden kann, ist dies jedoch aufgrund der dazu notwendigen manuellen Arbeit aufwendig und kostenträchtig. Aus diesem Grund wird der Heizleiter bevorzugt bei dem Aufbringen und/oder Extrudieren der Scheuerschutzschicht auf den Grundkörper aufgebracht. Beispielsweise wird der Heizleiter wendelförmig in einer Schraubenlinie zugeführt. Die schraubenförmige Gestalt sichert eine gute Biegbarkeit der Fluidleitung auch nach einem Ablängen und dem Aufbringen beziehungsweise Aufextrudieren der Scheuerschutzschicht.

Es ist ebenso möglich, dass die Scheuerschutzschicht mehrere Teilschichten aufweist und der Heizleiter zwischen zweien dieser Teilschichten angeordnet beziehungsweise eingebettet wird. Nicht zuletzt in diesem Fall ist es möglich, einen unisolierten Heizleiter zu verwenden, weil das thermoplastische Polyurethan eine hinreichend gute elektrische Isolationswirkung aufweist. Beispielsweise können mehrere Heizleiter, insbesondere unisolierte Heizleiter, beabstandet voneinander, insbesondere parallel beabstandet voneinander, verwendet werden. Es ist auch möglich, den Heizleiter in die Metallschicht zu integrieren, um eine verbesserte Wärmeverteilung zu realisieren. Beispielsweise wird hierbei der wenigstens eine Heizleiter in das Metallgeflecht eingebettet, das auf den Grundkörper aufgesetzt wird. Anschließend wird die Scheuerschutzschicht auf den Grundkörper aufgebracht, welche insoweit die Metallschicht und den Heizleiter umschließt.

Mithilfe des Metallgeflechts kann eine sichere Abstandsführung von mehreren Heizleitern erzielt werden. Beispielsweise weist hierzu das Geflecht Poren mit einer bestimmten Porenweite auf. Die Poren erlauben eine lokale Haftung zwischen dem thermoplastischen Polyurethan und dem Grundrohr. Anstelle des Metallgeflechts kann auch ein Textilgeflecht verwendet werden, welches vorzugweise elektrisch isolierend ist. In diesem Fall kann der wenigstens eine Heizleiter wiederum unisoliert verwendet werden. Es kann auch vorgesehen sein, dass der wenigstens eine Heizleiter aus einem elektrisch leitfähigen Textilfaden besteht. Es kann zudem vorgesehen sein, an Ablängstellen der Fluidleitung ein Abmantelungshilfsmaterial zu verwenden. Es ist weiter denkbar, an den Ablängstellen eine Anschlussstelle des Heizleiters vorzusehen, insbesondere indem der Heizleiter in einer Schleife verlegt wird, sodass ein überschüssiger Bereich des Heizleiters zur Herstellung einer Kontaktstelle zur Verfügung steht. Anstelle des Heizleiters kann grundsätzlich auch ein beliebiger elektrischer Leiter verwendet werden. Ein solcher kann beispielsweise der Sensierung einer Anbindung der Fluidleitung an weitere Einrichtungen und/oder einer Undichtheit dienen.

Die Erfindung betrifft auch ein Verfahren zum Herstellen einer Fluidleitung, insbesondere einer Fluidleitung gemäß den Ausführungen im Rahmen dieser Beschreibung, wobei die Fluidleitung eine Scheuerschutzschicht aufweist, die auf einen über wenigstens einen aus Kunststoff bestehende Schicht verfügenden Grundkörper der Fluidleitung aufgebracht wird, sodass die Scheuerschutzschicht eine Außenschicht der Fluidleitung bildet. Dabei ist vorgesehen, dass die Scheuerschutzschicht eine Schichtstärke von mindestens 0,1 mm bis höchstens 1,0 mm aufweist und aus thermoplastischem Polyurethan besteht, das als Polycarbonat-Polyol vorliegendes Polyol, insbesondere kurzkettiges, Diol als Kettenverlängerer und Isocyanat enthält. Auch hinsichtlich dieses Verfahrens wird bezüglich der Vorteile und weiterer vorteilhafter Ausgestaltungen auf die weiteren Ausführungen im Rahmen dieser Beschreibung verwiesen.

Im Zusammenhang mit dem erfindungsgemäßen Verfahren ist es bevorzugt, dass das Verfahren folgende Verfahrensschritte aufweist:
a) Bereitstellen eines Grundkörpers der Fluidleitung;
b) Aufbringen der Scheuerschutzschicht auf den Grundkörper durch Extrusion einer Extrusionsmischung;
wobei die Extrusionsmischung als einen polymeren Mischungsbestandteil das thermoplastische Polyurethan beinhaltet.

Erfindungsgemäß ist es bevorzugt, dass die Extrusionsmischung als einen weiteren Mischungsbestandteil ein Polyolefin, ein Ethylen-Vinylacetat-Copolymer oder beide beinhaltet. Vorzugsweise bilden der polymere Mischungsbestandteil und der weitere Mischungsbestandteil in einem Masterbatch, das häufig auch als Konzentrat bezeichnet wird, eine Matrix. Diese Matrix dient vorzugsweise zur Aufnahme oder Einbettung zumindest eines weiteren Mischungsbestandteils. Ebenso ist es in einer erfindungsgemäßen Ausgestaltung bevorzugt, dass der weiteren Mischungsbestandteil das polymere Material oder der Abriebverbesserer ist. Im Zusammenhang mit dem polymeren Material und/oder dem Abriebverbesserer wird auf die Ausführungen im Rahmen dieser Beschreibung Bezug genommen.

Vorzugsweise handelt es sich bei dem Grundkörper um einen im Querschnitt zwei- oder mehrschichtigen Aufbau in Leitungsform, insbesondere in Rohrform oder in Schlauchform. Bevorzugt weist der Grundkörper weniger Schichten einer Fluidleitung auf. Vorzugsweise weist der Grundkörper die Schichten auf, welche die Biegesteifigkeit der späteren Fluidleitung maßgeblich beziehungsweise hauptsächlich bestimmen. Des Weiteren gelten die vorstehenden Ausführungen zu den Fluidleitungen und deren Aufbau und Herstellung hier entsprechend.

In einer weiterhin bevorzugten Ausgestaltung des erfindungsgemäßen Verfahrens gilt, dass die Extrusionsmischung als weiteren Mischungsbestandteil ein Ethylen-Copolymer als Additiv, insbesondere als Abriebverbesserer, aufweist. Vorzugsweise machen der erste Mischungsbestandteil und gegebenenfalls der zweite Mischungsbestandteil gemeinsam mindestens 70 Gew.-%, vorzugsweise mindestens 85 Gew.-% und besonders bevorzugt mindestens 90 Gew.-% der Extrusionsmischung aus. Bevorzugt weist die Extrusionsmischung den weiteren Mischungsbestandteil in einem Bereich von 0,05 bis 10 Gew.-%, vorzugsweise in einem Bereich von 0,1 bis 5 Gew.-% und besonders bevorzugt in einem Bereich von 0,15 bis 3,5 Gew.-%, jeweils bezogen auf die Extrusionsmischung auf.

Eine Weiterbildung der Erfindung sieht vor, dass dem Polyol, dem Kettenverlängerer und dem Isocyanat ein Additiv, insbesondere als Bestandteil eines Masterbatches, beigemengt wird. Auf das mögliche Additiv beziehungsweise die möglichen Additive wurde vorstehend bereits hingewiesen. Das Additiv beziehungsweise die Additive können Bestandteil des Masterbatches sein. Bevorzugt enthält das Masterbatch insoweit ein Additiv oder mehrere Additive, welche dem thermoplastischen Polyurethan beispielsweise bei seiner Herstellung, also bei der Polyaddition der Reaktanten, beigemengt werden. Alternativ wird das Additiv beziehungsweise werden die Additive während der Herstellung der Scheuerschutzschicht, also bei dem thermoplastischen Verarbeiten des thermoplastischen Polyurethans, und/oder bei einem zusätzlichen Compoundierungsschritt beigefügt. Hierdurch lässt sich eine besonders einfache und effektive Herstellung der Scheuerschutzschicht erzielen.

Eine Weiterbildung der Erfindung sieht vor, dass das Additiv in ein Matrixpolymer des Masterbatches eingebettet ist, wobei als Matrixpolymer ein Polyolefin, ein Ethylen-Vinylacetat-Copolymer oder ein thermoplastisches Polyurethan verwendet wird. In anderen Worten kann das Matrixpolymer das thermoplastische Polyurethan selbst sein, welches das Polyol und das Isocyanat enthält, oder ein von dem Polyurethan verschiedenes Material. In jedem Fall werden die Konzentration des Additivs in dem Masterbatches und die Menge des dem Polyurethan zugesetzten Masterbatches derart gewählt, dass nach dem Beimengen des Masterbatches das Additiv mit dem gewünschten Anteil in dem Polyurethan vorliegt. Hierdurch wird die gewünschte Funktionalisierung des thermoplastischen Polyurethans sichergestellt.

Eine Weiterbildung der Erfindung sieht vor, dass die Scheuerschutzschicht durch Extrudieren auf den Grundkörper der Fluidleitung aufgebracht wird. Hierauf wurde vorstehend bereits eingegangen. Das Aufbringen der Scheuerschutzschicht durch Extrudieren hat den Vorteil, dass die Scheuerschutzschicht stoffschlüssig mit dem Grundkörper der Fluidleitung verbunden wird. Entsprechend ist eine einstückige Fluidleitung mit einer besonders hohen Beständigkeit realisiert.

Eine Weiterbildung der Erfindung sieht vor, dass das Additiv während des Extrudierens beigemengt wird, insbesondere gebunden in einem Masterbatch. Vor dem Extrudieren liegen insoweit das thermoplastische Polyurethan sowie das Additiv separat voneinander vor. Erst während des Extrudierens wird das Additiv dem Polyurethan beigemengt und schließlich während des Aufschmelzens des thermoplastischen Polyurethans dispergiert, sodass das Polyurethan und das Additiv nachfolgend gemeinsam aus einer formgebenden Öffnung zum Ausbilden der Fluidleitung austreten. Dies ermöglicht ein besonders zielgerichtetes Einstellen der Eigenschaften der Fluidleitung, nämlich unmittelbar bei ihrer Herstellung.

Selbstverständlich betrifft die Erfindung auch ein Kraftfahrzeug mit einer Fluidleitung gemäß den Ausführungen im Rahmen dieser Beschreibung. Hinsichtlich der Vorteile und möglicher vorteilhafter Weiterbildungen wird auf die entsprechenden Stellen der Beschreibung verwiesen. Die Fluidleitung ist besonders bevorzugt Bestandteil einer Antriebseinrichtung des Kraftfahrzeugs. Die Antriebseinrichtung dient dem Antreiben des Kraftfahrzeugs, insoweit also dem Bereitstellen eines auf das Antreiben des Kraftfahrzeugs gerichteten Antriebsdrehmoments. Zum Bereitstellen des Antriebsdrehmoments weist die Antriebseinrichtung zumindest ein Antriebsaggregat, insbesondere eine Kraftmaschine, beispielsweise eine Brennkraftmaschine oder eine elektrische Maschine, auf. Bevorzugt ist die Fluidleitung an die Kraftmaschine strömungstechnisch angeschlossen.

Die Erfindung betrifft schließlich die Verwendung eines thermoplastischen Polyurethans, das als Polycarbonat-Polyol vorliegendes Polyol, insbesondere kurzkettiges, Diol als Kettenverlängerer und Isocyanat enthält, als eine Außenschicht einer Fluidleitung bildende und auf einen über wenigstens eine aus Kunststoff bestehende Schicht verfügenden Grundkörper der Fluidleitung aufgebrachte Scheuerschutzschicht mit einer Schichtstärke von mindestens 0,1 mm bis höchstens 1,0 mm. In anderen Worten wird das thermoplastische Polyurethan aus zumindest dem Polycarbonat-Polyol, dem, vorzugsweise kurzkettigen, Diol und dem Isocyanat ausgebildet und nachfolgend als Scheuerschutzschicht verwendet. Hierbei wird es bevorzugt auf die Fluidleitung aufgebracht, nämlich derart, dass es nachfolgend als äußerste Schicht der Fluidleitung vorliegt und somit eine Au-ßenschicht der Fluidleitung bildet, welche einer Außenumgebung der Fluidleitung zugewandt ist.

Weiterhin betrifft die vorliegende Erfindung, insbesondere in einer anderen Ausgestaltung, die Verwendung eines Ethylen-Copolymers als ein Additiv, vorzugsweise als Abriebverbesserer, in einem Polyurethan in einer auf einen über wenigstens eine aus Kunststoff bestehende Schicht verfügenden Grundkörper einer Fluidleitung aufgebrachte Außenschicht der Fluidleitung, insbesondere einer Kraftmaschine oder einer die Kraftmaschine aufweisenden Antriebseinrichtung, mit einer Schichtstärke von mindestens 0,1 mm bis höchstens 1,0 mm. Auch hier gelten die vorstehenden Ausführungen zu bevorzugten Aspekten der einzelnen Merkmale dieser Ausgestaltung entsprechend. Dieses gilt insbesondere für die vorstehenden Ausführungen zu dem Abriebverbesserer.

Zur Hitze- und Alterungsprüfung und zur Bestimmung der Zugfestigkeiten, wurden für die Versuche 1 bis 6 S2-Prüfkörper nach ASTM D412 aus 2 mm spritzgegossenen Platten gestanzt, die bevorzugt uneingefärbt sind. Für die Versuche 1 bis 6 wurde immer als Isocyanat Diphenylmethan-4,4'-diisocyanat und als Kettenverlängerer immer 1,4-Butandiol eingesetzt. In den Versuchen 1 und 2 wurde je das gleiche Polyester-Polyol auf Adipinsäure und 1,4-Butandiol, in den Versuchen 3 und 4 das gleiche Polytetrathydrofuran-Polyol und in den Versuchen 5 und 6 je das gleiche Polycarbonat-Polyol eingesetzt. Die Versuche 1 und 2, die Versuche 3 und 4 sowie die Versuche 5 und 6 unterscheiden sich nur in dem Mischungsverhältnis Diphenylmethan-4,4'-diisocyanat : 1,4-Butandiol : Polyol und somit in der resultierenden Härte.

Versuch 1: Der für die genannte Prüfung eingesetzte Prüfkörper wurde aus thermoplastischem Polyurethan hergestellt, das Polyol, Kettenverlängerer und Isocyanat enthält oder im Wesentlichen auf diesen basiert oder ausschließlich aus diesen besteht. Als Polyol kamen Polyesterol auf Basis Adipinsäure und 1,4-Butandiol mit einem mittleren Molekulargewischt von 2.000 g/Mol (OH-Zahl = 56,1 KOH mg/g) zum Einsatz, als Isocyanat Diphenylmethan-4,4'-diisocyanat. Als Kettenverlängerer wurde 1,4-Butandiol verwendet. Der Prüfkörper wurde mit einer Härte von 87 Shore (A) und 36 Shore (D) ausgeführt, die Ausgangszugfestigkeit betrug 39 MPa.

Versuch 2: Die Ausgangsstoffe für diesen Versuch entsprechen denen des Versuchs 1. Jedoch wurde das Mischungsverhältnis der Reaktanten so angepasst, dass der Prüfkörper eine Härte von 95 Shore (A) und 48 Shore (D) und eine Ausgangszugfestigkeit von 49 MPa aufwies.

Versuch 3: Der Versuch 3 basiert auf dem Versuch 1 mit der Maßgabe, dass als Polyol Polytetrathydrofuran mit einem mittleren Molekulargewicht von 1000 g/Mol (OH-Zahl = 112,2 KOH mg/g) verwendet wird. Der Prüfkörper wies eine Härte von 88 Shore (A) und 38 Shore (D) auf, die Ausgangszugfestigkeit betrug 41 MPa.

Versuch 4: Die Ausgangsstoffe entsprechen denen aus Versuch 3. Jedoch wurde das Mischungsverhältnis der Reaktanten so angepasst, dass der Prüfkörper eine Härte von 95 Shore (A) und 48 Shore (D)und eine Ausgangszugfestigkeit von 49 MPa aufwies.

Versuch 5: Versuch 1 wurde wiederholt, mit der Maßgabe, dass in Versuch 5 das Polyol als Polycarbonat-Polyol mit einem mittleren Molekulargewicht von 2000 g/Mol (OH-Zahl = 56,1 KOH mg/g) eingesetzt wird. Der Prüfkörper wies eine Härte von 88 Shore (A) und 38 Shore (D) sowie eine Ausgangszugfestigkeit von 39 MPa auf.

Versuch 6: Die Ausgangsstoffe entsprechen denen aus Versuch 5. Jedoch wurde das Mischungsverhältnis der Reaktanten so angepasst, dass der Prüfkörper eine Härte von 63 Shore (D)sowie eine Ausgangszugfestigkeit von 44 MPa aufwies.

Für jeden Versuch wurde jeweils die Ausgangszugfestigkeit des Prüfkörpers ermittelt und anschließend die Zugfestigkeit nach einer Hitzelagerung bei 150 °C und nach einer Wasserlagerung bei 80 °C ermittelt. Die Ergebnisse sind jeweils auf die Ausgangszugfestigkeit bezogen. Für die Versuche ergaben sich die folgenden Ergebnisse:

| Versuch | Hitzelagerung | Wasserlagerung | | | |
|---|---|---|---|---|---|
| Dauer | 7 Tage | 14 Tage | 28 Tage | 42 Tage | 56 Tage |
| 1 (Vergleich) | 79 % | 36 % | --- | --- | --- |
| 2 (Vergleich) | 91 % | 49% | --- | --- | --- |
| 3 (Vergleich) | 34% | 89% | 76% | 78 % | 73 % |
| 4 (Vergleich) | 55 % | 99% | 94% | 92% | 90% |
| 5 (erfindungsgemäß) | 94 % | 99% | 87% | 84% | 83 % |
| 6 (erfindungsgemäß) | 95 % | 83 % | 80% | 78 % | 75 % |

Sind keine Werte angegeben, so wurde bei dem Versuch der Prüfkörper zerstört und war somit nicht mehr prüfbar. Es ist erkennbar, dass lediglich für die Versuche 5 und 6 Ergebnisse erzielt wurden, die einen Einsatz in dem geplanten Einsatzgebiet sinnvoll ermöglichen. Die Materialien der Versuche 3 und 4 versagen in der Hitzelagerung. Die Materialien der Versuche 1 und 2 versagen in der Hydrolyse. Nur die Materialien der Versuche 5 und 6 zeigen keinen wesentlichen Abfall in der Zugfestigkeit in der Hitzelagerung und in der Wasserlagerung.

Es zeigte sich zudem, dass diese Ergebnisse auf die Scheuerschutzschicht der Fluidleitung übertragbar sind. Aus allen Materialien der Versuche 1 bis 6 wurden Scheuerschutzschichten auf den Grundkörper der Fluidleitung mit einer Schichtstärke von 0,3 mm aufextrudiert und der gleichen Hitzelagerung (150 °C / 7 Tage) und Wasserlagerung (80 °C / 56 Tage) unterzogen. Bei der Extrusion wurden zur Schwarzeinfärbung 1 Gew.-% eines handelsüblichen Schwarzmasterbatches auf TPU-Basis zugesetzt. Die Scheuerschutzschichten aus den Materialien der Versuche 1 und 2 zeigten nach der Wasserlagerung und die Scherschutzschichten aus den Materialien der Versuche 3 und 4 nach der Hitzelagerung solch starke oberflächliche Schädigungen durch Risse und Ablösungen vom Grundkörper, dass eine Scheuerprüfung überhaupt nicht mehr möglich war. Eine Verwendung dieser Materialien würde zur Zerstörung der Fluidleitung führen und somit beispielsweise zum Ausfall des Antriebsaggregates.

Die Scheuerschutzschichten aus den Materialien der Versuche 5 und 6 zeigten nach der Hitzelagerung beziehungsweise der Wasserlagerung zwar eine optische Veränderung ihrer Oberflächen durch Vermattung, aber keinerlei mechanische Schädigungen, Risse oder gar Ablösungen vom Grundkörper. Die Scheuerschutzschicht bleibt völlig intakt. Die anschließende Scheuerschutzprüfung der Fluidleitungen nach VW-Norm TL 52668 bei 120 °C und 140 °C mit Scheuerschutzschichten aus den Materialien der Versuche 5 und 6 wurden bestanden.

Nun wurden die Scheuerschutzschichten aus den Versuchen 5 und 6, die bereits eine Wasserlagerung beziehungsweise eine Hitzelagerung durchlaufen hatten, zusätzlich der Hitzelagerung (150 °C / 7 Tage) beziehungsweise der Wasserlagerung (80 °C / 56 Tage) unterzogen. Auch nach diesen zusätzlichen gekreuzten Lagerungen zeigten sich keinerlei mechanische Schädigungen, Risse oder gar Ablösungen vom Grundkörper. Die Scheuerschutzschichten bleiben völlig intakt. Die anschließende Scheuerschutzprüfung nach VW-Norm TL 52668 bei 120 °C und 140 °C dieser wasser- und hitzegelagerten Fluidleitungen mit Scheuerschutzschichten aus den Materialien der Versuche 5 und 6 wurden bestanden.

Aus dem Material des Versuchs 6 wurden Prüfkörper zur Abriebprüfung nach DIN ISO 4649-A spritzgegossen. Hierbei wurden die Prüfkörper einmal ohne und einmal mit Zusatz von 2 Gew.-% des beschriebenen Abriebverbesserers hergestellt. Für die Versuche, die als Versuche 6-A1 und 6-B1 bezeichnet werden, ergaben sich die folgenden Ergebnisse:

| Versuch | Menge an Abriebverbesserer | Abriebwert nach DIN ISO 4649-A, relativer Volumenverlust | Abriebwiderstandsindex | Masseverlust |
|---|---|---|---|---|
| 6-A1 | 0 Gew.-% | 132,96 mm³ | 112,25 % | 0,1593 g |
| 6-B 1 | 2 Gew.-% | 89,56 mm³ | 166,65 % | 0,1037 g |

Die Versuche zeigen am Beispiel des thermoplastischen Polyurethans basierend auf erfindungsgemäßem Polycarbonat-Polyol, die Abriebverbesserung durch den Abriebverbesserer.

Aus dem Material des Versuchs 6 wurden Scheuerschutzschichten auf den Grundkörper der Fluidleitung mit einer Schichtstärke von 0,3 mm aufextrudiert. Bei der Extrusion wurde zur Schwarzeinfärbung 1 Gew.-% eines handelsüblichen Schwarzmasterbatches auf TPU-Basis zugesetzt. Der Versuch 6-A2 wurde mit dem Material des Versuchs 6 beziehungsweise 6-A1 durchgeführt. Für den Versuch 6-B2 wurden diesem Material - analog zu dem Versuch 6-B1 - zusätzlich 2 Gew.-% des Abriebverbesserers zugesetzt. Der Abriebverbesserer wurde hierbei als Masterbatch in Granulatform dem Material des Versuchs 6 während der Extrusion zugegeben.

Die anschließende Scheuerschutzprüfung nach VW-Norm TL 52668 bei 120 °C, 140 °C und 160 °C zeigte, dass die Beständigkeit der Scheuerschutzschicht beziehungsweise der Abrieb für das Material mit Abriebverbesserer deutlich besser ist als für das Material ohne Abriebverbesserer. So ist die Anzahl der Scheuerhübe bis zum Versagen für das Material des Versuchs 6-B2 deutlich höher als für das Material des Versuchs 6-A2, beispielsweise um mindestens 50 %, mindestens 70 %, mindestens 90 % oder mindestens 100 %. Bevorzugt ist die Anzahl der Scheuerhübe bis zum Versagen für das Material des Versuchs 6-B2 um einen Faktor von mindestens 2, mindestens 2,5 oder mindestens 3 größer als für das Material des Versuchs 6-A2, insbesondere für die höheren Temperaturen, also zum Beispiel bei 140 °C und/oder 160 °C. Im Rahmen des Versuchs 6-B2 wurden für alle Temperaturen deutlich mehr Scheuerhübe vorgenommen als von der VW-Norm verlangt, ohne dass ein Versagen aufgetreten wäre.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Schnittdarstellung durch eine Fluidleitung,
- Figur 2: eine schematische Längsschnittdarstellung durch die Fluidleitung in einer ersten Ausführungsform,
- Figur 3: eine schematische Längsschnittdarstellung der Fluidleitung in einer zweiten Ausführungsform, sowie
- Figur 4: eine schematische Längsschnittdarstellung der Fluidleitung in einer dritten Ausführungsform.

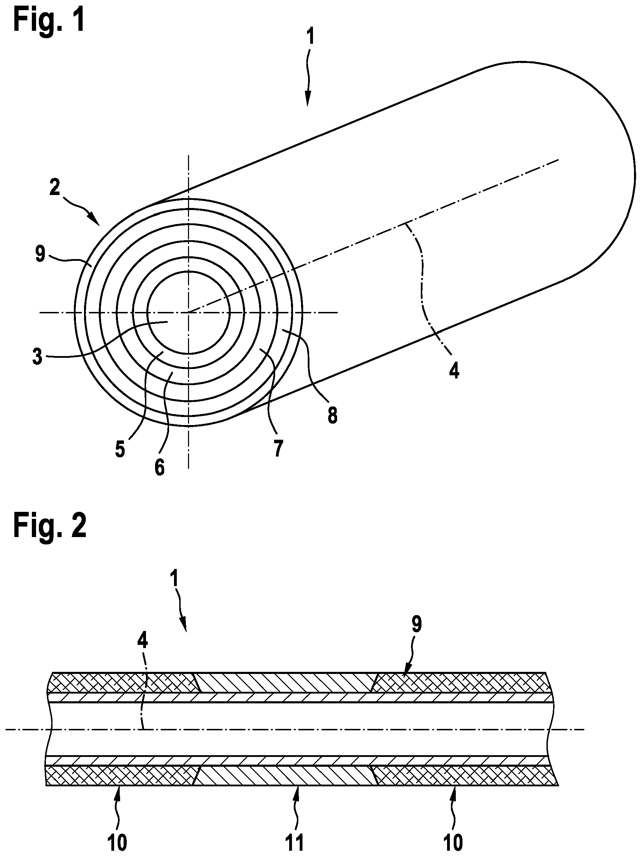

Die Figur 1 zeigt eine schematische Darstellung einer Fluidleitung 1, die aus einem Mehrschichtverbund 2 besteht. Der Mehrschichtverbund 2 umgreift zur Ausbildung eines Fluidströmungsraums 3 der Fluidleitung 1 eine Längsmittelachse 4 der Fluidleitung 1 in Umfangsrichtung vollständig. Im Querschnitt gesehen besteht der Mehrschichtverbund 2 aus einer ersten Schicht 5, einer zweiten Schicht 6, einer dritten Schicht 7 sowie einer vierten Schicht 8. Die Schichten 5, 6, 7 und 8 bilden einen Grundkörper der Fluidleitung 1. Auf den Grundkörper ist eine Scheuerschutzschicht 9 aufgebracht. Jede der Schichten 5, 6, 7 und 8 ist in Umfangsrichtung durchgehend ausgebildet und weist bevorzugt in Umfangsrichtung eine konstante Wandstärke auf. Dies kann zudem ebenfalls für die Scheuerschutzschicht 9 gelten.

In dem hier dargestellten Ausführungsbeispiel besteht die erste Schicht 5 aus einem Fluorpolymer, die zweite Schicht 6 aus einem Polyamid, die dritte Schicht 7 aus einem Ethylen-Vinylalkohol-Copolymer und die vierte Schicht 8 wiederum aus einem Polyamid. Grundsätzlich können die Wandstärken der hier dargestellten Schichten 5, 6, 7 und 8 identisch sein. Bevorzugt nehmen die Wandstärken der Schichten 5, 6, 7 und 8 in radialer Richtung nach außen ausgehend von der ersten Schicht 5 zumindest für einige der aufeinanderfolgenden Schichten zu. Die Scheuerschutzschicht 9 besteht in dem hier dargestellten Ausführungsbeispiel aus thermoplastischem Polyurethan, welches mit Additiven additiviert sein kann. Sie ist zudem durch Extrudieren auf den Grundkörper aufgebracht. Hierdurch wird eine besonders einfache Herstellung der Fluidleitung 1 und ein zuverlässiger Halt der Scheuerschutzschicht 9 an dem Grundkörper erzielt.

Das thermoplastische Polyurathen weist zumindest Polyol, vorzugsweise kurzkettiges, Diol als Kettenverlängerer und Isocyanat auf, wobei das Polyol ein Polycarbonat-Polyol ist. Zusätzlich ist dem Polyurethan ein Additiv beigemengt. Als Kettenverlängerer wird bevorzugt 1,4-Butandiol verwendet. Das Additiv ist beispielsweise ein Ethylen-Copolymer, besonders bevorzugt ein Maleinsäureanhydrid-modifiziertes Ethylen-Copolymer. Das Polyol, das Isocyanat bilden hinsichtlich ihrer Menge die Hauptbestandteile des Polyurethans. Beispielsweise besteht das Polyurethan zu mindestens 80 Gew.-%, mindestens 90 % oder mindestens 95 % aus diesen Stoffen. Der Rest setzt sich aus dem wenigstens einen Additiv sowie unvermeidbaren Verunreinigungen zusammen. Das Additiv weist einen Anteil von mindestens 0,1 Gew.-% und höchstens 3 Gew.-% oder höchstens 2 Gew.-% auf. Die unvermeidbaren Verunreinigungen liegen mit einem Anteil von höchstens 2 Gew.-%, bevorzugt höchstens 1 Gew.-% oder höchstens 0,5 Gew.-% vor. Bevorzugt ist der Anteil der unvermeidbaren Verunreinigungen jedoch niedriger und beträgt höchstens 0,25 Gew.-% oder höchstens 0,1 Gew.-%

Die Figur 2 zeigt eine schematische Längsschnittdarstellung der Fluidleitung 1. Angedeutet ist lediglich der Grundkörper, welcher aus Schichten 5, 6, 7 und 8 besteht. Auf diesen ist die Scheuerschutzschicht 9 aufgebracht. Es wird deutlich, dass die Fluidleitung 1 in axialer Richtung bezüglich der Längsmittelachse 4 Bereiche 10 sowie Bereiche 11 aufweist, die sich in axialer Richtung abwechseln. In den Bereichen 10 besteht die Scheuerschutzschicht 9 aus dem thermoplastischen Polyurethan. In den Bereichen 11 hingegen ist sie aus einem anderen Material ausgebildet, beispielsweise aus einem gummiartigen Material. Dieses andere Material ist vorzugsweise derart gewählt, dass es leichter von dem Grundkörper lösbar ist als das thermoplastische Polyurethan.

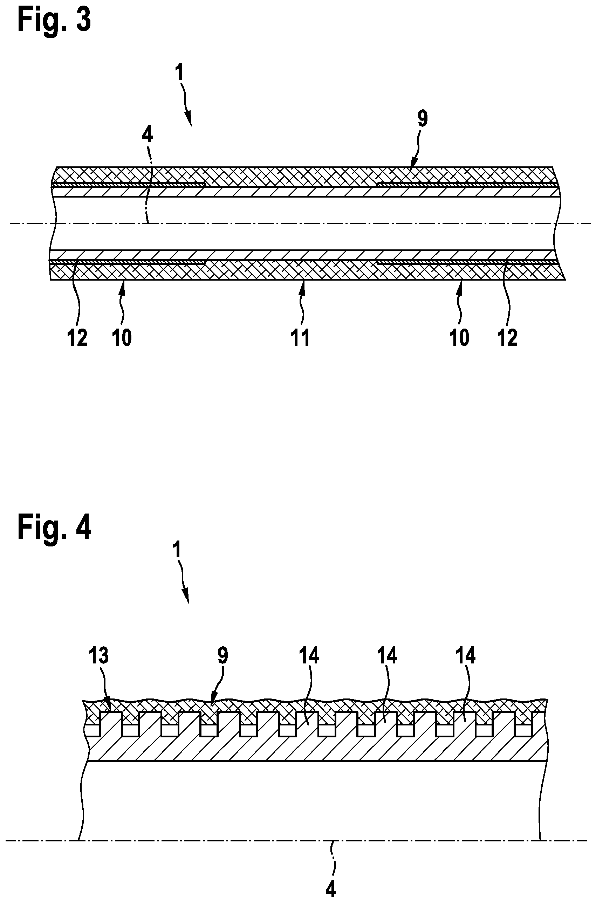

Die Figur 3 zeigt eine weitere Längsschnittdarstellung der Fluidleitung 1 in schematische Form. Wiederum liegen die Bereiche 10 und die Bereiche 11 vor. Es ist nun vorgesehen, dass in den Bereichen 10 zwischen der Scheuerschutzschicht 9 und dem Grundkörper ein Haftvermittler 12 vorliegt. Dies ist in den Bereichen 11 nicht der Fall. In diesem ist das thermoplastische Polyurethan haftvermittellos auf den Grundkörper aufgebracht. Hierdurch wird ein Abmanteln der Fluidleitung 1, also ein Entfernen der Scheuerschutzschicht 9, in den Bereichen 11 erleichtert. In anderen Worten haftet die Scheuerschutzschicht 9 in den Bereichen 10 stärker an dem Grundkörper als in den Bereichen 11.

Die Figur 4 zeigt eine weitere Ausgestaltung der Fluidleitung 1 im schematischen Längsschnitt. Es ist erkennbar, dass der Grundkörper eine Oberflächenstruktur 13 aufweist, auf welche die Scheuerschutzschicht 9 aufgebracht wird. In dem hier dargestellten Ausführungsbeispiel setzt sich die Oberflächenstruktur 13 aus in axialer Richtung voneinander beabstandeten Stegen 14 zusammen, von welchen hier lediglich einige beispielhaft angedeutet sind. Durch die Stege 14 ist der Grundkörper nach Art eines Wellrohrs ausgebildet. Die Verwendung der Oberflächenstruktur 13 verbessert ein mechanisches Anhaften der Scheuerschutzschicht 9 an dem Grundkörper.

## Patentansprüche

1. Fluidleitung (1) mit einem Grundkörper und einer Scheuerschutzschicht (9), wobei der Grundkörper über wenigstens eine aus Kunststoff bestehende Schicht verfügt und die Scheuerschutzschicht eine Außenschicht der Fluidleitung (1) bildet, **dadurch gekennzeichnet, dass** die Scheuerschutzschicht (9) eine Schichtstärke von mindestens 0,1 mm bis höchstens 1,0 mm aufweist und aus thermoplastischem Polyurethan besteht, das als Polycarbonat-Polyol vorliegendes Polyol, Diol als Kettenverlängerer und Isocyanat enthält.

2. Fluidleitung nach Anspruch 1, **dadurch gekennzeichnet, dass** das Isocyanat ein Diphenylmethan-4,4`-diisocyanat ist.

3. Fluidleitung nach einem der vorhergehenden Ansprüche, **dadurch gekennzeichnet, dass** das thermoplastische Polyurethan zusätzlich einen Abriebverbesserer aufweist.

4. Fluidleitung nach einem der vorhergehenden Ansprüche, **dadurch gekennzeichnet, dass** das thermoplastische Polyurethan zusätzlich mindestens einen der folgenden Stoffe als Additiv enthält: ein Gleitmittel, ein Wachs, ein phenolisches Antioxidans, ein aminisches Antioxidans, ein Thioester-basierendes Antioxidans, ein Phosphit, einen UV-Absorber, insbesondere basierend auf Benztriazol oder Triazin, ein sterisch gehindertes Amin, ein Hydrolyseschutzmittel, insbesondere ein Carbodiimid, ein Antistatikum, ein Flammschutzmittel und ein Ethylen-Copolymer als Abriebverbesserer.

5. Fluidleitung nach einem der vorhergehenden Ansprüche, **dadurch gekennzeichnet, dass** das Additiv einen Anteil von mindestens 0,05 Gew.-% und/oder höchstens 10 Gew.-% aufweist.

6. Verfahren zum Herstellen einer Fluidleitung (1), insbesondere einer Fluidleitung nach einem der Ansprüche 1 bis 5, wobei die Fluidleitung (1) eine Scheuerschutzschicht (9) aufweist, die auf einen über wenigstens eine aus Kunststoff bestehende Schicht verfügenden Grundkörper der Fluidleitung (1) aufgebracht wird, sodass die Scheuerschutzschicht (9) eine Außenschicht der Fluidleitung (1) bildet, **dadurch gekennzeichnet, dass** die Scheuerschutzschicht (9) eine Schichtstärke von mindestens 0,1 mm bis höchstens 1,0 mm aufweist und aus thermoplastischem Polyurethan besteht, das als Polycarbonat-Polyol vorliegendes Polyol, Diol als Kettenverlängerer und Isocyanat enthält.

7. Verfahren nach Anspruch 6, **dadurch gekennzeichnet, dass** dem Polyol, dem Kettenverlängerer und dem Isocyanat ein Additiv beigemengt wird.

8. Verfahren nach einem der vorhergehenden Ansprüche, **dadurch gekennzeichnet, dass** das Additiv in ein Matrixpolymer eines Masterbatches eingebettet ist, wobei als Matrixpolymer ein Polyolefin, ein Ethylen-Vinylacetat-Copolymer oder ein thermoplastisches Polyurethan verwendet wird.

9. Verfahren nach einem der vorhergehenden Ansprüche, **dadurch gekennzeichnet, dass** die Scheuerschutzschicht durch Extrudieren auf den Grundkörper der Fluidleitung aufgebracht wird.

10. Verfahren nach einem der vorhergehenden Ansprüche, **dadurch gekennzeichnet, dass** das Additiv während des Extrudierens beigemengt wird.

11. Verfahren nach einem der vorhergehenden Ansprüche, **dadurch gekennzeichnet, dass** das Verfahren folgende Verfahrensschritte aufweist:
a) Bereitstellen des Grundkörpers der Fluidleitung (1);
b) Aufbringen der Scheuerschutzschicht (9) auf den Grundkörper durch Extrusion einer Extrusionsmischung;
wobei die Extrusionsmischung als einen polymeren Mischungsbestandteil das thermoplastische Polyurethan enthält.

12. Verfahren nach Anspruch 11, **dadurch gekennzeichnet, dass** die Extrusionsmischung als weiteren Mischungsbestandteil ein Ethylen-Copolymer als Additiv enthält.

13. Verwendung eines thermoplastischen Polyurethans, das als Polycarbonat-Polyol vorliegendes Polyol, insbesondere kurzkettiges, Diol als Kettenverlängerer und Isocyanat enthält, als eine Au-ßenschicht einer Fluidleitung bildende und auf einen über wenigstens eine aus Kunststoff bestehende Schicht verfügenden Grundkörper der Fluidleitung (1) aufgebrachte Scheuerschutzschicht (9) mit einer Schichtstärke von mindestens 0,1 mm bis höchstens 1,0 mm.

14. Verwendung eines Ethylen-Copolymers als ein Additiv, vorzugsweise als Abriebverbesserer, in einem Polyurethan in einer auf einen über wenigstens eine aus Kunststoff bestehende Schicht verfügenden Grundkörper einer Fluidleitung (1) aufgebrachte Außenschicht der Fluidleitung (1), insbesondere einer Kraftmaschine oder einer die Kraftmaschine aufweisenden Antriebseinrichtung, mit einer Schichtstärke von mindestens 0,1 mm bis höchstens 1,0 mm.

## Claims

1. Fluid conduit (1) having a base body and a chafe layer (9), the base body having at least one layer made of plastic and the chafe layer forming an outer layer of the fluid conduit (1), **characterised in that** the chafe layer (9) comprises a layer thickness of at least 0.1 mm to at most 1.0 mm and consists of thermoplastic polyurethane which contains polyol present as polycarbonate polyol, diol as chain extender and isocyanate.

2. Fluid conduit according to claim 1, **characterised in that** the isocyanate is a diphenyl methane-4,4'-diisocyanate.

3. Fluid conduit according to one of the preceding claims, **characterised in that** the thermoplastic polyurethane additionally comprises an abrasion improver.

4. Fluid conduit according to one of the preceding claims, **characterised in that** the thermoplastic polyurethane additionally contains at least one of the following substances as an additive: a lubricant, a wax, a phenolic antioxidant, an aminic antioxidant, a thioester-based antioxidant, a phosphite, a UV absorber, in particular based on benzotriazole or triazine, a sterically hindered amine, a hydrolysis inhibitor, in particular a carbodiimide, an antistatic agent, a flame retardant and an ethylene copolymer as an abrasion improver.

5. Fluid conduit according to one of the preceding claims, **characterised in that** the additive has a proportion of at least 0.05% by weight and/or at most 10% by weight.

6. Method for producing a fluid conduit (1), in particular a fluid conduit according to one of claims 1 to 5, wherein the fluid conduit (1) has a chafe layer (9) which is applied to a base body of the fluid conduit (1) which has at least one layer made of plastic, so that the chafe layer (9) forms an outer layer of the fluid conduit (1), **characterised in that** the chafe layer (9) has a layer thickness of at least 0.1 mm to at most 1.0 mm and consists of thermoplastic polyurethane which contains polyol present as polycarbonate polyol, diol as chain extender and isocyanate.

7. Method according to claim 6, **characterised in that** an additive is mixed with the polyol, the chain extender and the isocyanate.

8. Method according to one of the preceding claims, **characterised in that** the additive is embedded in a matrix polymer of a masterbatch, wherein a polyolefin, an ethylenevinyl acetate copolymer or a thermoplastic polyurethane is used as the matrix polymer.

9. Method according to one of the preceding claims, **characterised in that** the chafe layer is applied to the base body of the fluid conduit by extrusion.

10. Method according to one of the preceding claims, **characterised in that** the additive is admixed during extrusion.

11. Method according to one of the preceding claims, **characterised in that** the method comprises the following method steps:
a) providing the base body of the fluid conduit (1);
b) applying the chafe layer (9) to the base body by extrusion of an extrusion mixture;
wherein the extrusion mixture contains the thermoplastic polyurethane as a polymeric mixture component.

12. Method according to claim 11, **characterised in that** the extrusion mixture contains an ethylene copolymer as an additive as a further mixture component.

13. Use of a thermoplastic polyurethane which contains polyol present as polycarbonate polyol, in particular short-chain diol as chain extender and isocyanate, as a chafe layer (9) with a layer thickness of at least 0.1 mm to at most 1.0 mm forming an outer layer of a fluid conduit and applied on a base body of the fluid conduit (1) having at least one layer made of plastic.

14. Use of an ethylene copolymer as an additive, preferably as an abrasion improver, in a polyurethane in an outer layer of a fluid conduit (1) applied on a base body of a fluid conduit (1) having at least one layer made of plastic, in particular of an engine or a drive device comprising the engine, with a layer thickness of at least 0.1 mm to at most 1.0 mm.

## Revendications

1. Conduite à fluide (1) présentant un corps de base et une couche de protection contre le frottement (9), le corps de base disposant d'au moins une couche constituée par un matériau synthétique et la couche de protection contre le frottement formant une couche externe de la conduite à fluide (1), **caractérisée en ce que** la couche de protection contre le frottement (9) présente une épaisseur de couche d'au moins 0,1 mm à au plus 1,0 mm et est constituée de polyuréthane thermoplastique, qui contient du polyol se trouvant sous forme de polycarbonatepolyol, du diol en tant qu'agent d'allongement de chaîne et de l'isocyanate.

2. Conduite à fluide selon la revendication 1, **caractérisée en ce que** l'isocyanate est un diphénylméthane-4,4'-diisocyanate.

3. Conduite à fluide selon l'une des revendications précédentes, **caractérisée en ce que** le polyuréthane thermoplastique présente en outre un agent d'amélioration de l'abrasion.

4. Conduite à fluide selon l'une des revendications précédentes, **caractérisée en ce que** le polyuréthane thermoplastique contient en outre au moins l'une des substances suivantes comme additif : un lubrifiant, une cire, un antioxydant phénolique, un antioxydant aminique, un antioxydant à base de thioester, un phosphite, un absorbant des UV, en particulier à base de benzotriazole ou de triazine, une amine stériquement encombrée, un agent de protection contre l'hydrolyse, en particulier un carbodiimide, un antistatique, un agent ignifuge et un copolymère d'éthylène en tant qu'agent d'amélioration de l'abrasion.

5. Conduite à fluide selon l'une des revendications précédentes, **caractérisée en ce que** l'additif (B) représente une proportion d'au moins 0,05% en poids et/ou d'au plus 10% en poids.

6. Procédé pour la fabrication d'une conduite à fluide (1), en particulier d'une conduite à fluide selon l'une des revendications 1 à 5, la conduite à fluide (1) présentant une couche de protection contre le frottement (9) qui est appliquée sur un corps de base, disposant d'au moins une couche constituée par un matériau synthétique, de la conduite à fluide (1) de telle sorte que la couche de protection contre le frottement (9) forme une couche externe de la conduite à fluide (1), **caractérisé en ce que** la couche de protection contre le frottement (9) présente une épaisseur de couche d'au moins 0,1 mm à au plus 1,0 mm et est constituée de polyuréthane thermoplastique, qui contient du polyol se trouvant sous forme de polycarbonatepolyol, du diol en tant qu'agent d'allongement de chaîne et de l'isocyanate.

7. Procédé selon la revendication 6, **caractérisé en ce qu'un** additif est ajouté en mélangeant au polyol, à l'agent d'allongement de chaîne et à l'isocyanate.

8. Procédé selon l'une des revendications précédentes, **caractérisé en ce que** l'additif est incorporé dans un polymère de matrice d'un lot maître, une polyoléfine, un copolymère d'éthylène-acétate de vinyle ou un polyuréthane thermoplastique étant utilisé(e) comme polymère de matrice.

9. Procédé selon l'une des revendications précédentes, **caractérisé en ce que** la couche de protection contre le frottement est appliquée par extrusion sur le corps de base de la conduite à fluide.

10. Procédé selon l'une des revendications précédentes, **caractérisé en ce que** l'additif est ajouté en mélangeant pendant extrusion.

11. Procédé selon l'une des revendications précédentes, **caractérisé en ce que** le procédé présente les étapes de procédé suivantes :
a) mise à disposition du corps de base de la conduite à fluide (1) ;
b) application de la couche de protection contre le frottement (9) sur le corps de base par extrusion d'un mélange d'extrusion ;
le mélange d'extrusion contenant, comme constituant de mélange polymère, le polyuréthane thermoplastique.

12. Procédé selon la revendication 11, **caractérisé en ce que** le mélange d'extrusion contient, comme autre constituant de mélange, un copolymère d'éthylène comme additif.

13. Utilisation d'un polyuréthane thermoplastique, qui contient du polyol se trouvant sous forme de polycarbonatepolyol, en particulier à courte chaîne, du diol comme agent d'allongement de chaîne et de l'isocyanate, en tant que couche de protection contre le frottement (9), présentant une épaisseur de couche d'au moins 0,1 mm à au plus 1,0 mm, formant une couche externe d'une conduite à fluide et appliquée sur un corps de base de la conduite à fluide (1) disposant d'au moins une couche constituée par un matériau synthétique.

14. Utilisation d'un copolymère d'éthylène en tant qu'additif, de préférence comme agent d'amélioration de l'abrasion, dans un polyuréthane dans une couche externe de la conduite à fluide (1), appliquée sur un corps de base d'une conduite à fluide (1) disposant d'au moins une couche constituée par un matériau synthétique, en particulier d'une machine motrice ou d'un dispositif d'entraînement présentant la machine motrice, présentant une épaisseur de couche d'au moins 0,1 mm à au plus 1,0 mm.
